# EUROPÄISCHE PATENTSCHRIFT

(11) **EP 2 493 994 B1**
(45) Veröffentlichungstag und Bekanntmachung des Hinweises auf die Patenterteilung: **02.07.2014**
(21) Anmeldenummer: 10766022.7
(22) Anmeldetag: 08.10.2010
(51) Int. Cl.: C09J 5/06, C09J 7/02

(54) **VERFAHREN ZUM VERKLEBEN VON HITZEAKTIVIERT VERKLEBBAREN DÜNNEN FLÄCHENELEMENTEN**
METHOD FOR ADHERING HEAT-ACTIVATED, BONDABLE THIN SURFACE ELEMENTS
PROCÉDÉ POUR COLLER DES ÉLÉMENTS PLANS MINCES THERMOCOLLABLES

(30) Priorität: 30.10.2009 DE 102009046263
(43) Veröffentlichungstag der Anmeldung: 05.09.2012
(73) Patentinhaber: Tesa SE, 20253 Hamburg (DE)
(72) Erfinder: STAIGER, Anja, 22459 Hamburg (DE); KEITE-TELGENBÜSCHER, Klaus, 22529 Hamburg (DE); GRÜNAUER, Judith, 22117 Hamburg (DE); ENGELDINGER, Hans Karl, 25451 Quickborn (DE)
(86) Internationale Anmeldenummer: PCT/EP2010/065063
(87) Internationale Veröffentlichungsnummer: WO 2011/051095

(56) Entgegenhaltungen:
- WO-A1-2007/094418
- WO-A1-2008/139994
- JP-A- 57 073 064
- US-A1- 2005 103 430
- DATABASE WPI Week 199632 Thomson Scientific, London, GB; AN 1996-319150 XP002616036, & JP 8 143824 A (TATEGU SOGO SHOSHA FUTABA KK) 4. Juni 1996 (1996-06-04)

## Beschreibung

Die Erfindung betrifft ein Verfahren zum Verkleben eines hitzeaktiviert verklebbaren Flächenelements, das eine Gesamtdicke von weniger als 70 µm aufweist, mit einem Verklebungssubstrat, das einen Wärmeleitungskoeffizienten von höchstens 5 W/mK aufweist, das Verfahren umfassend die Schritte eines Bereitstellens eines hitzeaktiviert verklebbaren Flächenelements mit einer elektrisch leitenden Schicht und zumindest einer hitzeaktiviert verklebenden Klebemassenschicht, eines In-Kontakt-Bringens des Verklebungssubstrats mit der zumindest einen hitzeaktiviert verklebenden Klebemassenschicht des hitzeaktiviert verklebbaren Flächenelements, wodurch ein Vorverbund gebildet wird, und eines induktiven Erwärmens des Vorverbunds in einem Magnet-Wechselfeld einer Frequenz von mindestens 100 Hz und höchstens 200 kHz für eine Dauer von höchstens 20 s, wodurch ein Endverbund gebildet wird. Die Erfindung betrifft ferner ein hitzeaktiviert verklebbares Flächenelement mit einer elektrisch leitenden Schicht und zumindest einer hitzeaktiviert verklebenden Klebemassenschicht, wobei das hitzeaktiviert verklebbare Flächenelement eine Gesamtdicke von weniger als 70 µm aufweist und die elektrisch leitende Schicht eine Schichtdicke von weniger als 50 µm aufweist.

Hitzeaktiviert verklebbare Flächenelemente (hitzeaktivierbare Flächenelemente) werden eingesetzt, um hochfeste Verbindungen von Fügeteilen zu erhalten. Insbesondere eignen sich derartige Flächenelemente, um bei einer geringeren Dicke der Klebefuge vergleichbare oder höhere Festigkeiten zu erreichen als dies mit Flächenelementen möglich ist, die ausschließlich Haftklebemassensysteme enthalten. Derartige hochfeste Verklebungen sind insbesondere bei der voranschreitenden Miniaturisierung von elektronischen Geräten von Bedeutung, etwa im Bereich der Konsumgüterelektronik, der Unterhaltungselektronik oder der Kommunikationselektronik, zum Beispiel für Mobiltelefone, PDAs, Laptops und andere Rechner, Digitalkameras und Anzeigegeräte wie etwa Displays und Digitalreader.

Die WO-A1-2007094418 beschreibt die Fügung elektronischer Bauteile durch dünne verklebbare Flächenelemente.

In besonderem Maße steigen die Anforderungen an die Verarbeitbarkeit und Stabilität von Klebeverbindungen bei tragbaren Konsumgüterelektronikartikeln. Dies liegt zum einen daran, dass die Abmessungen solcher Artikel immer geringer werden, so dass sich auch die für eine Klebeverbindung nutzbare Fläche verringert. Zum anderen muss eine Klebeverbindung in derartigen Geräten besonders stabil sein, da tragbare Artikel starken mechanischen Belastungen wie etwa Stößen oder Stürzen standhalten müssen und zudem in einem breiten Temperaturbereich eingesetzt werden sollen.

Daher werden in derartigen Produkten bevorzugt hitzeaktiviert verklebbare Flächenelemente eingesetzt, die hitzeaktiviert verklebende Klebemassen aufweisen, also Klebemassen, die bei Raumtemperatur keine oder eine allenfalls geringe Eigenklebrigkeit aufweisen, unter Einwirkung von Hitze aber die für eine Verklebung erforderliche Klebkraft zu den jeweiligen Verklebungssubstraten (Fügepartnern, Haftgrund) aufbauen. Solche hitzeaktiviert verklebenden Klebemassen liegen bei Raumtemperatur häufig in fester Form vor, werden während des Verklebens aber durch Temperatureinwirkung entweder reversibel oder irreversibel in einen Zustand hoher Klebkraft überführt. Reversibel hitzeaktiviert verklebende Klebemassen sind zum Beispiel Klebemassen auf der Basis thermoplastischer Polymere, wohingegen irreversibel hitzeaktiviert verklebende Klebemassen etwa Reaktivklebemassen sind, in denen infolge einer thermischen Aktivierung chemische Reaktionen wie beispielsweise Vernetzungsreaktionen ablaufen, wodurch diese Klebemassen besonders für permanente hochfeste Verklebungen geeignet sind.

Allen hitzeaktiviert verklebenden Klebemassensystemen ist gemeinsam, dass diese beim Verkleben erhitzt werden müssen. Insbesondere bei Verklebungen, bei denen die Klebemassensysteme nach außen hin von den Verklebungssubstraten vollflächig abgedeckt sind, ist es besonders wichtig, die zum Aufschmelzen oder zur Aktivierung der Klebemasse erforderliche Wärme schnell zu der Verklebungsfläche hin zu transportieren. Ist dabei eines der Verklebungssubstrate ein guter Wärmeleiter, so ist es möglich, dieses Verklebungssubstrat durch eine externe Wärmequelle zu erwärmen, beispielsweise durch einen direkten Wärmeübertrager, eine Infrarotheizung oder dergleichen.

Die für eine schnelle homogene Erwärmung der Klebemasse erforderliche kurze Aufheizzeit lässt sich im Falle eines solchen direkten Erhitzens oder Kontakterhitzens allerdings nur für einen großen Temperaturgradienten zwischen der Wärmequelle und dem Verklebungssubstrat realisieren. Daher sollte das zu erwärmende Verklebungssubstrat selber gegenüber Temperaturen unempfindlich sein, die zum Teil sogar erheblich höher ausfallen können als es das Aufschmelzen oder Aktivieren der Klebemasse eigentlich erfordern würde.

Anders ist die Situation jedoch, wenn keines der Verklebungssubstrate die Wärme hinreichend gut leitet oder wenn die Verklebungssubstrate gegenüber höheren Temperaturen empfindlich sind, wie dies zum Beispiel bei vielen Kunststoffen der Fall ist, aber auch bei elektronischen Bauteilen wie etwa Halbleiterbauteilen oder Flüssigkristallmodulen. Zur Verklebung von Verklebungssubstraten aus wenig wärmeleitenden oder wärmeempfindlichen Materialien bietet es sich daher an, das hitzeaktiviert verklebbare Flächenelement selbst mit einem intrinsischen Mechanismus zum Heizen auszurüsten, so dass die zum Verkleben erforderliche Wärme nicht von außen eingebracht werden muss, sondern direkt im Innern des Flächenelements selber erzeugt wird. Aus dem Stand der Technik sind unterschiedliche Mechanismen bekannt, mittels derer sich ein derartiges internes Erwärmen realisieren lässt, etwa als Erwärmen mittels einer elektrischen Widerstandsheizung, durch magnetische Induktion oder infolge einer Wechselwirkung mit Mikrowellenstrahlung.

Die zwei letztgenannten Verfahren bieten im Hinblick auf den Ablauf einer Verklebung und die praktisch-technische Ausgestaltung der externen Erhitzungsvorrichtung, die mit dem wärmeerzeugenden Bereich des Flächenelements in Wechselwirkung tritt und so eine Erwärmung des Flächenelements bewirkt, den Vorteil, dass das Erwärmen des Flächenelements keinen direkten und unmittelbaren Kontakt des Flächenelements mit der externen Erhitzungsvorrichtung erfordert, es kann vielmehr sogar berührungsfrei durchgeführt werden. Insbesondere hat sich dabei ein Erwärmen durch magnetische Induktion als praktisch herausgestellt, da eine nach dem Induktionsprinzip arbeitende Erhitzungsvorrichtung apparativ erheblich einfacher zu konstruieren ist als ein Mikrowellenemitter.

Unterschiedliche Effekte können zur Erwärmung im Magnet-Wechselfeld beitragen: Besitzt der Körper, der zum Erwärmen in das Wechselfeld eingebracht wird, elektrisch leitende Bereiche, so werden durch das Magnet-Wechselfeld in diesen Bereichen Wirbelströme induziert. Weisen die Bereiche dabei einen von Null verschiedenen elektrischen Widerstand auf, so resultieren die dabei auftretenden Wirbelstrom-Leitungsverluste im Auftreten von Joulescher Wärme (Stromwärme). Damit sich derartige Wirbelströme überhaupt ausbilden können, müssen die elektrisch leitfähigen Bereiche allerdings eine Mindestgröße besitzen; diese ist um so größer, je geringer die Frequenz des von außen angelegten Magnet-Wechselfeldes ist.

Besitzt der Körper, der zum Erwärmen in das Wechselfeld eingebracht wird, jedoch ferromagnetische Bereiche, so richten sich die Elementarmagnete dieser Bereiche jeweils parallel zum äußeren Magnet-Wechselfeld aus. Die während der Änderung des äußeren Magnetfelds auftretenden Hystereseverluste (Ummagnetisierungsverluste) haben ebenfalls eine Erwärmung des Körpers zur Folge. Je nach dem Material des in das Magnet-Wechselfeld eingebrachten Körpers können beide Effekte gemeinsam zur Erwärmung des Körpers beitragen (etwa bei ferromagnetischen Metallen wie Eisen, Nickel und Kobalt oder bei ferromagnetischen Legierungen wie Mu-Metall und Alnico) oder aber jeweils nur einer dieser beiden Effekte zum Erwärmen beitragen (etwa nur Wirbelströme bei nicht-ferromagnetischen Metallen wie Aluminium oder nur Hysterese bei elektrisch wenig leitenden Materialien wie Eisenoxidpartikeln).

In der Fertigungstechnik sind seit einigen Jahrzehnten bereits Vorrichtungen und Verfahren auf der Grundlage der induktiven Erwärmung bekannt, mittels derer Polymersysteme erhitzt werden können, beispielsweise zum Verkleben von Fügeteilen, zum Versiegeln von fertigungsbedingten Nähten sowie zum Härten oder Anlassen von Polymeren. Dabei enthalten die Erhitzungsvorrichtungen üblicherweise Induktoren zum Erzeugen des Magnet-Wechselfeldes, die den zu erwärmenden Körper jeweils komplett oder teilweise umgeben und diesen entlang seines gesamten Umfangs gleichmäßig erwärmen. Hierbei lässt sich bei Bedarf natürlich auch ein gezielt ungleichmäßiges Erhitzen realisieren. In der Praxis werden hierfür beispielweise häufig tunnelförmige Induktionsspulen eingesetzt, da bei dieser geometrischen Anordnung das Magnet-Wechselfeld der Induktionsspule nicht nur aus einer Richtung einwirkt. sondern zusätzlich auch von der Seite auf den zu erhitzenden Körper.

Werden hitzeaktiviert verklebbare Flächenelemente durch induktives Erwärmen thermisch aktiviert, so werden dafür in der Regel Flächenelemente eingesetzt, die als Heißklebemasse eine hitzeaktiviert verklebende Klebemasse enthalten, die an den Seitenflächen einer elektrisch leitenden Schicht angeordnet ist, etwa einer Flächenstruktur mit einer Folie aus einem Metall oder einem metallierten Polymer, einer durchbrochenen Metallfolie, einem Drahtnetz, einem flächig ausgebreiteten Streckmetall, einem Metallvlies oder Metallfasern. Die letzteren diskontinuierlichen Flächenstrukturen bieten dabei den Vorteil, dass die Heißklebemasse durch die Öffnungen in der jeweiligen Flächenstruktur hindurchtreten kann und dadurch den inneren Zusammenhalt des Flächenelements insgesamt verbessert, was dann allerdings auf Kosten einer Abnahme der Effizienz der Erwärmung geschieht.

Einer der Nachteile der bislang bekannten Verfahren besteht darin, dass hierbei nicht bloß der konkret zu erhitzende Bereich des jeweiligen Körpers dem Magnet-Wechselfeld ausgesetzt wird, sondern stets ein erheblich größerer Bereich des Körpers; dies ist besonders bei einer Anordnung erkennbar, in der der zu erwärmende Körper vollständig in eine tunnelförmige Induktionsspule eingebracht und somit auch vollständig dem Magnet-Wechselfeld ausgesetzt wird. Daher können derartige herkömmliche Verfahren zum induktiven Erwärmen nur zum Verkleben von solchen Verklebungssubstraten zum Einsatz gelangen, bei denen eine thermische oder elektrische Beschädigung der unerwünschterweise dem Magnet-Wechselfeld ausgesetzten Bereiche ausgeschlossen ist. Dies hat allerdings zur Folge, dass die bislang bekannten Verfahren zum Verkleben von Baueinheiten in elektronischen Geräten in der Regel nicht verwendet werden können, da viele der elektronischen Bauteile wie etwa Halbleiterbauelemente oder Displaymodule nur bedingt hitzeresistent sind und daher beim Erwärmen beschädigt werden können, zumal diese Baueinheiten häufig auch selber elektrisch leitende Bereiche enthalten, so dass eine induktive Erwärmung auch innerhalb dieser Baueinheiten auftritt.

In den letzten Jahren ist das induktive Erwärmen beim Verkleben erneut in das Zentrum der Aufmerksamkeit gerückt. Der Grund hierfür ist den nunmehr verfügbaren nanopartikulären Systemen wie zum Beispiel MagSilica™ (Evonik AG) zu suchen, die in das Material des zu erwärmenden Körper eingearbeitet werden können und so ein Erwärmen des Körpers über sein gesamtes Volumen ermöglichen, ohne dass dessen mechanische Stabilität dadurch in nennenswerter Weise beeinträchtigt wird. So ist beispielsweise für Verklebungen in mobilen elektronischen Geräten von der Firma Lohmann ein Produkt unter der Bezeichnung Duplocoll RCD™ erhältlich, das induktiv erwärmbare Nanopartikel enthält.

Aufgrund der geringen Größe dieser nanoskopischen Systeme ist es jedoch nicht möglich, derartige Produkte in Magnet-Wechselfeldern mit Frequenzen aus dem Mittelfrequenzbereich effizient zu erwärmen. Vielmehr sind für die neuartigen Systeme Frequenzen aus dem Hochfrequenzbereich erforderlich. Grade bei diesen Frequenzen tritt jedoch das Problem einer Beschädigung von elektronischen Bauteilen im Magnet-Wechselfeld besonders stark zutage. Die Erzeugung von Magnet-Wechselfeldern mit Frequenzen im Hochfrequenzbereich erfordert überdies einen erhöhten apparativen Aufwand und ist somit ökonomisch ungünstig. Zudem ist die Verwendung von nanopartikulären Füllstoffen auch in ökologischer Hinsicht problematisch, da sich diese bei einem späteren Recycling kaum von den umgebenden Materialien abtrennen lassen. Darüber hinaus ist es nur schwer möglich, diese Partikel in sehr dünnen Filmen einzusetzen, da infolge der starken Neigung nanopartikulärer Systeme zur Agglomeratbildung die hiermit erzeugten Filme zumeist stark inhomogen sind.

Grundsätzlich sind verschiedene Erhitzungsvorrichtungen für eine induktive Erwärmung bekannt; diese lassen sich unter anderem nach den Frequenzen unterscheiden, die das mit der jeweiligen Erhitzungsvorrichtung erzeugte Magnet-Wechselfeld besitzt. So kann eine Induktionserwärmung unter Verwendung eines Magnetfeldes erfolgen, dessen Frequenz im Frequenzbereich von etwa 100 Hz bis etwa 200 kHz liegt (den so genannten Mittelfrequenzen; MF) oder auch im Frequenzbereich von etwa 300 kHz bis etwa 100 MHz liegt (den so genannten Hochfrequenzen; HF). Darüber hinaus sind als Sonderfall auch Erhitzungsvorrichtungen bekannt, deren Magnetfeld eine Frequenz aus dem Bereich der Mikrowellen besitzt, beispielsweise die Mikrowellen-Standardfrequenz von 2,45 GHz.

Mit der Frequenz des eingesetzten Wechselfeldes steigt der technische Aufwand, der betrieben werden muss, um das Wechselfeld zu erzeugen, und damit die Kosten für die Erhitzungsvorrichtung. Während Mittelfrequenzanlagen derzeit bereits zu einem Marktpreis von etwa 5.000 Euro erhältlich sind, sind für Hochfrequenzanlagen mindestens 25.000 Euro zu berücksichtigen. Darüber hinaus steigen auch die Sicherheitsanforderungen an die Erwärmungsanlage mit der Frequenz, so dass bei Hochfrequenzanlagen zusätzlich zu den höheren Anschaffungskosten regelmäßig auch höhere Kosten für die Installation einer solchen Anlagentechnik anfallen.

In Anbetracht der damit verbundenen höheren Kosten und des größeren Risikos einer Beschädigung beim Verkleben elektronischer Bauteile sowie im Hinblick auf die schlechtere Rezyklierbarkeit sind die nanopartikulären Systeme demnach nicht sonderlich geeignet, um als Bestandteil hitzeaktiviert verklebbarer Flächenelemente für ein induktives Erhitzen zum schonenden Verkleben eingesetzt zu werden. Um dieses Ziel zu erreichen werden bevorzugt Magnet-Wechselfelder mit Frequenzen aus dem Mittelfrequenzbereich eingesetzt.

Jedoch auch bei Erhitzungsvorrichtungen, die mit Magnet-Wechselfeldern mit Frequenzen aus dem Mittelfrequenzbereich arbeiten, hat es sich als schwierig herausgestellt, ein schonendes Verkleben zu realisieren. Um die für industrielle Fertigungsprozesse erforderlichen hohen Verarbeitungsgeschwindigkeiten zu erhalten, darf die Erwärmungsdauer der hitzeaktiviert verklebbaren Flächenelemente nur sehr kurz sein. Zum Erreichen der erforderlichen Verklebungstemperaturen ist es daher erforderlich, die Aufheizgeschwindigkeit sehr hoch zu wählen.

Wird das hitzeaktiviert verklebbare Flächenelement jedoch auf einem Verklebungssubstrat verklebt, das eine nur geringe Wärmeleitfähigkeit aufweist, das heißt eine Wärmeleitfähigkeit von höchstens 5 W/mK, so kann die induktiv im Flächenelement erzeugte Wärme von diesem nicht schnell genug abgeleitet werden. Die Wärme verbleibt vielmehr zunächst für einige Zeit in der Verklebungsfläche, wodurch es dort zu einem Wärmestau kommt. Infolge dessen kann das Flächenelement wie auch das Verklebungssubstrat (etwa elektronische Bauteile) lokal überhitzt und dadurch beschädigt werden. Die Gefahr einer Überhitzung ist noch größer, wenn das Verklebungssubstrat zusätzlich zu einer nur geringen Wärmeleitfähigkeit ebenfalls eine nur geringe Wärmekapazität besitzt, da somit auch die Möglichkeit einer temporären Wärmespeicherung nicht gegeben ist.

Beides ist zum Beispiel bei Verklebungssubstraten der Fall, die an der Verklebungsfläche Polymere aufweisen. Polymere besitzen aufgrund der kleineren freien Weglänge der Phononen eine geringere Wärmeleitfähigkeit als Metalle und weisen zudem aufgrund der in Polymerketten geringeren Anzahl an Freiheitsgraden eine nur kleine Wärmekapazität auf. Hinzu kommt, dass die thermische Beständigkeit von Polymeren häufig geringer ist als die anderer Substratmaterialien wie zum Beispiel von Metallen oder Gläsern.

Hierbei ist es natürlich um so problematischer, wenn nicht nur das Verklebungssubstrat, sondern darüber hinaus auch die weiteren Bestandteile des Flächenelements (etwa der Träger oder weitere Funktionsschichten) aus derartigen Materialien mit geringer Wärmeleitfähigkeit und Wärmekapazität bestehen, da dann eine Wärmeabfuhr oder Wärmespeicherung nicht einmal über das Flächenelement erfolgen kann.

So existiert kein allgemein anwendbares Verklebungsverfahren, mit dem sich Verklebungssubstrate über hitzeaktiviert verklebbare Flächenelemente in hohen Taktraten schonend verbinden lassen, indem die Flächenelemente einem Magnet-Wechselfeld einer Frequenz aus dem Mittelfrequenzbereich ausgesetzt werden. Vielmehr wird bei einer induktiven Erwärmung grade dann eine thermische Beschädigung des Flächenelements oder eines Verklebungssubstrats beobachtet, wenn das Verklebungssubstrat eine polymere Verklebungsfläche aufweist, insbesondere dann, wenn es sich dabei um ein elektronisches Bauteil handelt.

Auf der anderen Seite steigen die Anforderungen, die an die Abmessungen hitzeaktiviert verklebbarer Flächenelemente gestellt werden: Angesichts der zunehmenden Miniaturisierung auf dem Gebiet der Elektronik müssen auch die Flächenelemente, mittels derer die elektronischen Baueinheiten verklebt werden, immer kleiner und dabei insbesondere immer dünner werden, ohne dass dies allerdings zu Lasten der Festigkeit gehen darf. So sind derzeit auf dem Markt beispielsweise hitzeaktiviert verklebbare Folien verfügbar, die Gesamtdicken von etwa 30 µm bis etwa 250 µm aufweisen.

Um hitzeaktiviert verklebbare Flächenelemente mit derartig geringer Gesamtdicke herzustellen zu können, die gleichzeitig eine hinreichend hohe Erwärmungsgeschwindigkeit besitzen, um ein Verkleben mit hohen Taktraten zu ermöglichen, werden vollflächige folienartige Metallschichten mit Schichtdicken zwischen 0,25 µm und 75 µm verwendet. Diese lassen sich in Magnet-Wechselfeldern mit Frequenzen aus dem Mittelfrequenzbereich induktiv erwärmen, wobei Verklebungen bereits bei kurzen Erwärmungsdauern (Induktionszeiten) zwischen 50 ms und 10 s realisiert weden können. Da diese Flächenelemente jedoch ausschließlich aus Klebemassenschichten und einer sehr dünnen Metallfolie bestehen, weisen sie eine geringe Tragfähigkeit und eine extrem geringe Eigenstabilität gegenüber mechanischen Beanspruchungen auf, wie sie etwa beim Abspulen von Klebebändern von einer Vorratsrolle oder beim Entfernen von temporären Trägern entstehen. Daher werden derartige Flächenelemente häufig bereits beim Verkleben beschädigt.

Selbst wenn es derartige Flächenelemente mit geringer Eigenstabilität einzusetzen gilt, stehen weitere Aspekte bislang einer konkreten Nutzung entgegen. So ist ein entscheidender Punkt hierbei die Schichtdicke der Klebemassenschichten: Wird diese zu dünn gewählt, so kann die Klebemasse nicht mikroskopische Unebenheiten in der Oberfläche des Vetklebungssubstrats ausgleichen, so dass beim Verkleben die Oberfläche des hitzeaktiviert verklebbaren Flächenelements infolge seiner Eigenspannung nicht vollständig mit der Oberfläche des Verklebungssubstrats in Kontakt tritt und sich somit eine nur geringe Verklebungsfestigkeit ergibt.

Damit Flächenelemente mit derartig dünnen Metallschichten mit hoher Verklebungsfestigkeit auf einem Verklebungssubstrat verklebt werden können, müssen diese Flächenelemente an den Seitenflächen der Metallschichten also Klebemassenschichten von hoher Schichtdicke aufweisen. Mit der Schichtdicke der Klebemassenschicht steigt jedoch das Volumen der hitzeaktiviert verklebenden Klebemasse, die beim Aktivieren zu erwärmen ist. Somit muss beim induktiven Erwärmen entweder die Erwärmungsdauer oder aber die effektive Heizleistung vergrößert werden, um ein Verkleben solcher dicken Klebemassenschichten zu gewährleisten, wodurch aber ebenfalls thermische Abbauprozesse verstärkt auftreten.

Aufgrund dieser beiden gegenläufigen Effekte ist es also entweder möglich, bei induktiver Erwärmung verklebbare Flächenelemente mit hinreichender Verklebungsfestigkeit herzustellen, bei deren Verkleben jedoch der Verbund starken thermischen Belastungen ausgesetzt ist, so dass Beschädigungen auftreten können, oder aber bei induktiver Erwärmung verklebbare Flächenelemente herzustellen, bei deren Verkleben nur geringe thermische Belastungen auftreten, die aber auch eine nur geringe Verklebungsfestigkeit bieten.

Daher werden in der Praxis nahezu ausschließlich Flächenelemente verwendet, die relativ dicke Klebemassenschichten und Metallfolien mittlerer Schichtdicke aufweisen, da bei diesen die oben genannten Probleme nicht so ausgeprägt auftreten wie dies bei dünneren Flächenelementen der Fall ist. Somit ist derzeit kein Verfahren zum Verkleben von hitzeaktiviert verklebbaren Flächenelementen mit einer Gesamtdicke von weniger als 70 µm bekannt, mit dem sich unter Vermeidung der Nachteile des Stands der Technik auf schonende Weise Verklebungen auf Verklebungssubstraten realisieren lassen, die den elektrischen Strom nicht leiten und die einen geringen Wärmeleitungskoeffizienten aufweisen. Ein solches Verfahren sollte zudem auch zur Verklebung von Baueinheiten elektronischer Geräte mit hohen Taktraten geeignet sein, insbesondere zum Verkleben von Verklebungssubstraten aus Polymeren und Gläsern.

Diese Aufgabe wird erfindungsgemäß durch ein Verfahren der eingangs genannten Art gelöst, bei dem als das hitzeaktiviert verklebbare Flächenelement zum Verkleben von Baueinheiten elektronischer Geräte ein Flächenelement bereit gestellt wird, dessen elektrisch leitende Schicht eine Schichtdicke von weniger als 50 µm aufweist, wobei das Verhältnis der Schichtdicke der elektrisch leitenden Schicht zu der Gesamtdicke des hitzeaktiviert verklebbaren Flächenelements größer ist als 0,33, insbesondere größer als 0,5 oder sogar größer als 0,6.

Überraschenderweise ist es mit diesem Verfahren gelungen, auch sehr kleine Verklebungsflächen, wie sie etwa in mobilen elektronischen Geräten üblich sind, mittels Induktionserwärmung im Mittelfrequenzbereich innerhalb kurzer Zeit zuverlässig zu erwärmen und dadurch hochstabil zu verkleben, ohne die Elektronik oder andere metallische Bauteile oder Polymere dabei zu beschädigen. Somit wird also das induktive Erhitzen eines hitzeaktiviert verklebbaren Flächenelements zum Verkleben des Flächenelements auf einem Verklebungssubstrat mit geringer Wärmekapazität ermöglicht, ohne dass dabei eine thermische oder elektrische Beschädigung erfolgt. Dass hierbei Verklebungen mit hoher Verklebungsfestigkeit erhalten werden, ist ausschließlich auf den erfindungsgemäßen Einsatz des speziellen Flächenelements zurückzuführen, dessen elektrisch leitende Schicht dünner ist als 50 µm und die gleichzeitig zu mehr als einem Drittel zur Gesamtdicke des Flächenelements beiträgt.

Unerwarteterweise wurde durch das erfindungsgemäße Verfahren eine hochfeste Verklebung erhalten, die eine in etwa gleich große Klebfestigkeit aufweist wie Verklebungen, die mit hitzeaktiviert verklebbaren Flächenelementen erhalten werden, die nicht zum induktiven Erwärmen angepasst sind und die lediglich aus einer einzigen Klebemassenschicht bestehen. Als hochfeste Klebeverbindung im Sinne der vorliegenden Erfindung wird insbesondere eine Verklebung mit einem hitzeaktiviert verklebbaren Flächenelement angesehen, das bei einer Verklebung auf einer Polycarbonatoberfläche eine statische Scherfestigkeit von mehr als 100 N/mm² aufweist (bestimmt nach DIN 53283 bei 23 °C für eine Prüfgeschwindigkeit von 1 mm/min).

Mit einem derartigen Ergebnis wurde nicht gerechnet, da das erfindungsgemäß einzusetzenden Flächenelement zwei Grenzflächen zwischen den Klebemassen und der elektrisch leitenden Schicht aufweist. Derartige Grenzflächen haben typischerweise eine innere Schwächung des gesamten Flächenelements zur Folge. Daher wurde erwartet, dass das eine Verklebung mit einem induktiv erwärmbaren Flächenelement eine erheblich geringere Verklebungsfestigkeit aufweist als eine Verklebung mit einem Flächenelement, das nicht zum induktiven Erwärmen angepasst ist und ausschließlich aus einer homogenen Klebemassenschicht besteht.

In den durchgeführten Versuchen wurden Verklebungen mit einem geringen Ausmaß an thermischen Beschädigungen der Klebemasse oder der Verklebungssubstrate allerdings nur dann reproduzierbar erhalten, wenn beide dieser Bedingungen erfüllt waren. So traten Beschädigungen oder Zersetzungsprozesse erheblich häufiger auf, wenn die Schichtdicke der elektrisch leitenden Schicht weniger als ein Drittel der Gesamtdicke des Flächenelements betrug. Der positive Effekt einer Schichtdicke der elektrisch leitenden Schicht von mindestens einem Drittel der Gesamtdicke des Flächenelements wird darauf zurückgeführt, dass sich in diesem Fall die zum Aktivieren erforderliche Erwärmungsdauer verringerte und die in der elektrisch leitenden Schicht erzeugte Wärme schneller und gleichmäßiger im Flächenelement verteilte, so dass die Klebemasse über ihr gesamtes Volumen (über ihre Fläche wie auch ihre Dicke) homogen erwärmt wurde. Überdies wurde, selbst wenn die Schichtdicke der elektrisch leitenden Schicht mehr als ein Drittel der Gesamtdicke betrug, eine nur geringe Verklebungsfestigkeit beobachtet, wenn die Schichtdicke der elektrisch leitenden Schicht insgesamt größer war als 50 µm; letzteres wurde auf thermische Zersetzungen, die infolge einer zu großen Erwärmungsgeschwindigkeit innerhalb der elektrisch leitenden Schicht auftreten, in Verbindung mit einer nur unzureichenden Wärmeabfuhr durch die polymere Klebemasse zurückgeführt, die in einem Überhitzen der Klebemasse an der elektrisch leitenden Schicht zugewandten Seite resultierte.

Vielmehr wurde bei Einsatz des erfindungsgemäßen Verfahrens beobachtet, dass dann, wenn ein Flächenelement verwendet wird, bei dem beide Bedingungen erfüllt sind, das Risiko einer im Verlauf des induktiven Erwärmens eintretenden Beschädigung erheblich reduziert wurde. Auf diese Weise wird ein besonders einfaches Verfahren zur Verfügung gestellt, das für eine Vielzahl an Verklebungssubstraten geeignet ist, mit dem sich sogar Baueinheiten mit elektronischen Bauelementen wie Halbleiterbauelementen oder Anzeigemodulen hochfest über eine Klebefuge von minimaler Dicke verbinden lassen.

Es ist zudem möglich, die induktive Erwärmung auf die Fläche der Klebefuge zu begrenzen, was zusätzlich zu einer Verwendung von hitzeaktiviert verklebbaren Flächenelementen in Form von entsprechenden Zuschnitten noch weiter verbessert werden kann, wenn das Magnet-Wechselfeld in unmittelbarer Nähe der Klebefuge konzentriert wurde, etwa durch Integration des Induktors in das Presswerkzeug.

In einer vorteilhaften Ausgestaltung wird das Verfahren derart durchgeführt, dass als das hitzeaktiviert verklebbare Flächenelement ein Flächenelement bereit gestellt wird, das eine Gesamtdicke von weniger als 50 µm aufweist, insbesondere von weniger als 30 µm. Auf diese Weise lassen sich Verklebungen mit besonders dünnen Klebefugen realisieren, wie sie insbesondere für mikroelektronische Bauelemente sowie in mobilen Geräten von Bedeutung sind.

Günstig ist es auch, wenn als das hitzeaktiviert verklebbare Flächenelement ein Flächenelement bereit gestellt wird, bei dem die elektrisch leitende Schicht eine Schicht mit einer Schichtdicke von weniger als 20 µm ist, insbesondere von weniger als 10 µm. Hierdurch wird die Aufheizgeschwindigkeit des Flächenelements technisch auf besonders einfache Weise nach oben hin begrenzt.

Weiterhin kann das Verfahren derart durchgeführt werden, dass das bereitgestellte hitzeaktiviert verklebbare Flächenelement eine weitere Klebemassenschicht aufweist, wobei die weitere Klebemassenschicht vor dem Ausbilden des Vorverbunds mit einem weiteren Verklebungssubstrat verbunden wird. Auf diese Weise ist es möglich, Verklebungssubstrate mit einem daran befestigten Flächenelement zu erhalten, das erst später mit einem anderen Verklebungssubstrat thermisch aktiviert verklebt wird. Stattdessen kann das hitzeaktiviert verklebbare Flächenelement natürlich auch eine weitere hitzeaktiviert verklebende Klebemassenschicht aufweisen, wenn der Vorverbund vor dem induktiven Erwärmen mit einem weiteren Verklebungssubstrat in Kontakt gebracht wird, indem die weitere hitzeaktiviert verklebende Klebemassenschicht des hitzeaktiviert verklebbaren Flächenelements des Vorverbunds mit dem weiteren Verklebungssubstrat in Kontakt gebracht wird. Auf diese Weise können mehrere gleiche oder auch unterschiedliche Verklebungssubstrate miteinander in einem einzigen induktiven Erwärmungsschritt miteinander verbunden und die Erwärmungsdauer gleichzeitig insgesamt verringert werden.

Vorteilhafterweise beträgt die Aufheizgeschwindigkeit beim induktiven Erwärmen mindestens 2,5 °C/s und höchstens 200 °C/s, insbesondere mindestens 10 °C/s und höchstens 100 °C/s. Infolge der so gewählten Mindestaufheizgeschwindigkeit lässt sich die zum Verkleben der hitzeaktiviert verklebenden Klebemassen erforderliche Zeit weiter verringen und dadurch die Taktrate beim Verkleben weiter steigern. Durch die Begrenzung der Aufheizgeschwindigkeit auf niedrige Aufheizgeschwindigkeiten wird überdies die Gefahr einer thermischen Schädigung der Klebemassen oder der Verklebungssubstrate verringert und ein unkontrolliertes Aufschmelzen der Klebemasse sowie ein unerwünschtes Aufschmelzen des Verklebungssubstrats vermieden.

Das hitzeaktiviert verklebbare Flächenelement kann dabei insbesondere ein zugeschnittenes Flächenelement sein, dessen Form auf die Form der Verklebungsfläche zugeschnitten ist. Hierdurch wird die Gefahr, dass das Verklebungssubstrat im Verlauf der induktiven Erwärmung thermisch beschädigt wird, weiter reduziert, da im Wesentlichen nur der Bereich lokal erwärmt wird, an dem eine Verklebung auch tatsächlich beabsichtigt ist. Somit wird die erzeugte Wärmemenge verringert, so dass auch nur eine geringere Wärmemenge abgeführt werden muss.

Als das hitzeaktiviert verklebbare Flächenelement kann überdies ein Flächenelement mit einer minimalen Stegbreite von weniger als 5 mm bereit gestellt werden, insbesondere von weniger als 3 mm oder sogar von weniger als 2 mm. Lediglich durch Einsatz des erfindungsgemäßen Verfahrens ist es möglich, auch dann, wenn nur wenig Fläche zum Verkleben von Verklebungssubstraten zur Verfügung steht, die für eine Klebeverbindung nutzbare Fläche zu vergrößern und damit die Festigkeit der Verklebung insgesamt zu erhöhen, ohne dass die Bereiche geringer Stegbreite dabei thermisch beschädigt werden. Derartig kleine laterale Strukturen lassen sich in den bisher bekannten Verklebungsverfahren mittels induktivem Erwärmen nicht oder allenfalls nur mit großem Aufwand verwenden. Des weiteren ist es von Vorteil, wenn als das hitzeaktiviert verklebbare Flächenelement ein Flächenelement bereit gestellt wird, dessen Form für eine offene Verklebungsflächengeometrie angepasst ist. Flächenelemente mit einer derartigen Geometrie lassen sich in den bislang bekannten auf Induktion beruhenden Verfahren nicht oder allenfalls mit großem Aufwand formwahrend homogen verkleben, so das die Ausdehnung des erfindungsgemäßen Prinzips auf derartige Systeme einen weiteren Nutzen bieten kann.

Günstig ist es ferner, wenn als das Verklebungssubstrat ein Verklebungssubstrat verwendet wird, das eine im dreidimensionalen Raum gewölbte Verklebungsfläche aufweist. Dadurch lassen sich auf besonders einfache Weise auch dreidimensional ausgestaltete Verklebungsflächenprofile realisieren, da so ein homogenes Erwärmen der hitzeaktiviert verklebenden Klebemassenschicht über deren gesamte Flächenausdehnung möglich ist. Derartige gekrümmte Verklebungsflächen werden etwa häufig bei der Verklebung von Displayscheiben oder Gehäusen in mobilen elektronischen Geräten erzeugt.

Von Vorteil ist es hierbei ferner, wenn der Vorverbund gleichzeitig mit dem induktiven Erwärmen senkrecht zu einem Seitenflächenabschnitt des hitzeaktiviert verklebbaren Flächenelements mit einem Druck (Pressdruck) von mindestens 1 MPa beaufschlagt wird, insbesondere von mindestens 3 MPa, so dass die Klebemasse vollflächig in Kontakt zu dem Verklebungssubstrat tritt. Die Richtungsangabe "senkrecht zu einem Seitenflächenabschnitt des hitzeaktiviert verklebbaren Flächenelements" bedeutet hierbei, dass für eine flache Verklebung, in der das Flächenelement plan vorliegt (und somit auch dessen beiden Seitenflächen), eine Presskraft (zumindest auch) senkrecht zur Hauptausdehnung des Flächenelements wirkt, wohingegen für eine dreidimensional gewölbte Verklebung eine Presskraft in Richtung senkrecht zu einer der Hauptausdehnungen des Flächenelements und somit zumindest in einem Teilbereich senkrecht zu den Seitenflächen des Flächenelements wirkt. In einem weiteren Schritt kann der Druck auch nach Beendigung des induktiven Erwärmens für eine Nachpressdauer aufrecht erhalten werden, wobei der Endverbund während zumindest eines Teils der Nachpressdauer erneut induktiv erwärmt wird. Dies bietet den Vorteil, dass die Klebeverbindung infolge des Nachdrucks sich weiter verfestigen und in der verfestigten Form einer Nachhärtung unterzogen werden kann, so dass infolge der hierdurch erzielten Kohäsionssteigerung in der Klebemasse die Festigkeit der Verklebung insgesamt erhöht wird.

Zum praktischen Realisieren der Druckbeaufschlagung kann diese zusammen mit dem induktiven Erwärmen mittels einer Vorrichtung mit zumindest einem Pressstempelelement durchgeführt werden, das ein Induktionsheizungsmittel aufweist. Durch Verwendung einer derartigen Vorrichtung, mit der sich beide wesentlichen Aspekte des Verfahrens mittels ein und desselben Werkzeugs ausführen lassen, kann der Verfahrensablauf beschleunigt und die Taktzahl erhöht werden, da ein Abstimmen von Pressvorrichtung und Induktionsvorrichtung (Induktor) aufeinander nicht erforderlich ist, und darüber hinaus das ansonsten separate Positionieren von Pressvorrichtung und Induktor nunmehr in einem einzigen Schritt durchgeführt werden kann. Bevorzugt ist diese Vorrichtung ortsfest installiert, um die bei dem erfindungsgemäß einzusetzenden hohen Pressdruck erforderliche Betriebssicherheit zu gewährleisten.

Wie zuvor dargelegt, bietet das erfindungsgemäße Verfahren besondere Vorteile, wenn es zum Verkleben von Baueinheiten elektronischer Geräte eingesetzt wird, da sich derartige Verklebungen ansonsten nicht in hohen Taktzahlen ausbilden lassen, ohne dass ein erhöhtes Risiko besteht, dass die elektronischen Bauteile hierbei thermisch beschädigt werden.

Das erfindungsgemäße Verfahren ermöglich es, ein Flächenelement mit einer elektrisch leitenden Schicht und zumindest einer hitzeaktiviert verklebenden Klebemassenschicht bereit zu stellen, das eine Gesamtdicke von weniger als 70 µm aufweist und dessen elektrisch leitende Schicht eine Schichtdicke von weniger als 50 µm aufweist., und das zur Durchführung des erfindungsgemäßen Verfahrens besonders angepasst ist. Dabei ist das Verhältnis der Schichtdicke der elektrisch leitenden Schicht zu der Gesamtdicke des hitzeaktiviert verklebbaren Flächenelements größer ist als 0,33, insbesondere größer als 0,5 oder sogar größer als 0,6

Ein derartiges Flächenelement lässt sich nahezu beschädigungsfrei bei einer induktiven Erwärmung mit einem Verklebungssubstrat verbinden und ermöglicht damit eine besonders stabile und gleichzeitig besonders dünne Verklebung. Dabei ist es besonders günstig, wenn die Gesamtdicke des hitzeaktiviert verklebbaren Flächenelements weniger als 50 µm beträgt, insbesondere weniger als 30 µm. Auf diese Weise lassen sich besonders Verklebungen mit besonders dünnen Klebefugen realisieren, wie sie insbesondere für mikroelektronische Bauelemente sowie in mobilen Geräten von Bedeutung sind.

In einer vorteilhaften Ausgestaltungsform weist die elektrisch leitende Schicht des hitzeaktiviert verklebbaren Flächenelements eine Schichtdicke von weniger als 20 µm auf, insbesondere von weniger als 10 µm, um dessen Aufheizgeschwindigkeit auf besonders einfache Weise zu begrenzen. Darüber hinaus kann das Flächenelement eine weitere hitzeaktiviert verklebende Klebemassenschicht aufweisen. Ein derartiges Flächenelement ist als zweiseitig verklebbares Flächenelement besonders geeignet, um zwei Verklebungssubstrate miteinander zu verbinden.

Bevorzugt ist die elektrisch leitende Schicht dabei zusätzlich auch magnetisch, insbesondere ferromagnetisch oder paramagnetisch. Wenngleich für derartige Materialien erwartet wurde, dass in diesen zusätzlich zu einer Induktion von Wirbelströmen auch eine Erwärmung durch Hystereseverluste auftritt und die Erwärmungsgeschwindigkeit insgesamt größer ausfällt, so wurde hingegen beobachtet, dass selbst magnetische Materialien wie Nickel oder magnetische Stähle, die den elektrischen Strom gut leiten, durchweg geringere Erwärmungsgeschwindigkeiten haben als Materialien, die zwar den elektrischen Strom sehr gut leiten, selbst aber nicht magnetisch sind, beispielsweise Kupfer oder Aluminium. Daher lässt sich durch Verwendung von magnetischen, den elektrischen Strom leitenden Materialien die Erwärmung leichter kontrollieren und das Auftreten von Erwärmungseffekten abseits der Klebefuge vermindern.

Ferner ist es günstig, wenn die elektrisch leitende Schicht eine elektrische Leitfähigkeit von mehr als 20 MS/m aufweist (was beispielsweise durch Verwendung von Aluminium erreicht werden kann), insbesondere von mehr als 40 MS/m (was beispielsweise durch Verwendung von Kupfer oder Silber erreicht werden kann), jeweils bestimmt für 300 K. Auf diese Weise lassen sich die zur Herstellung hoher Festigkeiten der Klebverbindung erforderlichen ausreichend hohen Temperaturen in der Klebefuge sowie eine homogene Durchwärmung auch in sehr dünnen Flächenelementen realisieren. Überraschenderweise wurde beobachtet, dass die Erwärmung infolge induzierter Wirbelströme mit der zunehmenden Leitfähigkeit steigt und nicht, wie erwartet, mit zunehmendem elektrischem Widerstand.

Das Flächenelement kann als zugeschnittenes Flächenelement ausgebildet sein, dessen Form an die Form der Verklebungsfläche angepasst ist, um die Gefahr zu verringern, dass das Verklebungssubstrat im Verlauf der induktiven Erwärmung thermisch beschädigt wird.

Zur Verdeutlichung der Erfindung ist diese im Folgenden allgemein beschrieben, wozu einige repräsentative Beispiele einzelner Bestandteile von Teilaspekten der Erfindung erläutert werden, die sich in Abhängigkeit von den jeweils gewünschten Eigenschaften nahezu beliebig miteinander verknüpfen lassen.

Grundsätzlich betrifft die Erfindung also ein Verfahren zum Verkleben eines hitzeaktiviert verklebbaren Flächenelements mit einer bestimmten Art von Verklebungssubstraten. Als Flächenelement im Sinne dieser Anmeldung gelten insbesondere alle üblichen und geeigneten Gebilde mit im Wesentlichen flächenförmiger Ausdehnung. Diese ermöglichen eine flächige Verklebung und können verschieden ausgestaltet sein, insbesondere flexibel, als Klebefolie, Klebeband, Klebeetikett oder als Formstanzling.

Derartige Flächenelemente weisen jeweils zwei Seitenflächen auf, eine Vorderseite und eine Rückseite. Die Begriffe Vorderseite und Rückseite beziehen sich dabei auf die beiden Oberflächen des Flächenelements parallel zu seiner Hauptausdehnung (Flächenausdehnung, Hauptausdehnungsebene) und dienen lediglich der Unterscheidung dieser beiden auf gegenüberliegenden Seiten des Flächenelements angeordneten Flächen, ohne dass durch die Wahl der Begriffe die absolute räumliche Anordnung der beiden Flächen festgelegt ist; demzufolge kann die Vorderseite auch die räumlich hinten gelegene Seitenfläche des Flächenelements darstellen, nämlich wenn dementsprechend die Rückseite dessen räumlich vorne gelegene Seitenfläche bildet. Das hitzeaktiviert verklebbare Flächenelement muss hierbei eine Gesamtdicke von weniger als 70 µm aufweisen und kann dabei eine Gesamtdicke von weniger als 50 µm aufweisen, bevorzugt sogar von weniger als 30 µm.

Dieses hitzeaktiviert verklebbare Flächenelement soll auf einem Verklebungssubstrat verklebt werden. Dafür weist das Flächenelement an zumindest einer seiner beiden Seitenflächen eine hitzeaktiviert verklebende Klebemasse auf, bevorzugt sogar an beiden Seitenflächen. Hitzeaktiviert verklebende Klebemassen sind alle Klebemassen, die bei erhöhten Temperaturen heiß verklebt werden und nach dem Erkalten eine mechanisch belastbare Verbindung bieten. Üblicherweise liegt die Klebemasse in Form einer Klebemassenschicht vor.

Als Schicht wird insbesondere eine flächenförmige Anordnung eines Systems einheitlicher Funktionalität bezeichnet, deren Abmessungen in einer Raumrichtung (Dicke oder Höhe) signifikant kleiner sind als in den beiden anderen Raumrichtungen, die die Hauptausdehnung definieren (Länge und Breite). Eine derartige Schicht kann kompakt oder auch durchbrochen ausgebildet sein und aus einem einzigen Material oder aus unterschiedlichen Materialien bestehen, insbesondere, wenn diese zur einheitlichen Funktionalität dieser Schicht beitragen. Eine Schicht kann eine über ihre gesamte Flächenausdehnung konstante Dicke aufweisen oder aber unterschiedliche Dicken. Darüber hinaus kann eine Schicht natürlich auch mehr als eine einzige Funktionalität aufweisen.

Das vorliegend zu verklebende Flächenelement enthält zumindest zwei unterschiedliche Schichten, nämlich mindestens eine elektrisch leitende Schicht und mindestens eine hitzeaktiviert verklebende Klebemassenschicht. Als elektrisch leitende Schicht wird jede Schicht aus mindestens einem Material angesehen, das bei einer Temperatur von 23 °C eine Leitfähigkeit (Elektronen und/oder Löcher) von mindestens 1 mS/m aufweist, so dass in diesem ein elektrischer Stromfluss auftreten kann. Dies sind insbesondere Metalle, Halbmetalle sowie andere metallische Materialien und gegebenenfalls auch Halbleiter, in denen der elektrische Widerstand gering ist. Damit ist der elektrische Widerstand der elektrisch leitenden Schicht also einerseits hoch genug, um beim Fließen eines elektrischen Stroms in der Schicht eine Erwärmung der Schicht zu ermöglichen, andererseits aber auch niedrig genug, um einen Stromfluss durch die Schicht überhaupt zu etablieren. Als Sonderfall sind als elektrisch leitende Schichten auch Schichten aus Materialien anzusehen, die einen niedrigen magnetischen Widerstand aufweisen (und somit eine hohe magnetische Leitfähigkeit oder magnetische Permeabilität), beispielsweise Ferrite, obgleich diese häufig einen bei Wechselstrom niedriger Frequenzen höheren elektrischen Widerstand aufweisen, so dass hier eine Erwärmung häufig erst bei tendenziell höheren Magnet-Wechselfeldfrequenzen erreicht wird.

Grundsätzlich kann die zumindest eine elektrisch leitende Schicht beliebig geeignet ausgebildet sein, beispielsweise als dünne vollflächig-kompakte oder durchbrochene Schicht, sofern die Schichtdicke weniger als 50 µm beträgt, insbesondere weniger als 20 µm oder sogar weniger als 10 µm. Letzteres ermöglicht es, die Aufheizgeschwindigkeit nach oben hin auf relativ einfache Weise zu begrenzen.

Gleichzeitig muss das Verhältnis der Schichtdicke der elektrisch leitenden Schicht zu der Gesamtdicke des hitzeaktiviert verklebbaren Flächenelements aber auch größer sein als 0,33, insbesondere größer als 0,5 oder sogar größer als 0,6. Mit anderen Worten entfällt erfindungsgemäß mehr als ein Drittel der Gesamtdicke des Flächenelements auf die elektrisch leitende Schicht und weniger als zwei Drittel auf den Rest des Flächenelements (also auf die zumindest eine Klebemasse oder auf mehrere Klebemassen sowie alle weiteren Bestandteile des Flächenelements wie etwa permanente Träger oder weitere Funktionsschichten). Insbesondere bildet die elektrisch leitende Schicht mehr als die Hälfte der Gesamtdicke des Flächenelements und die Klebemasse(n) weniger als die Hälfte, oder die elektrisch leitende Schicht bildet sogar mehr als drei Fünftel der Gesamtdicke des Flächenelements und die Klebemasse(n) weniger als zwei Fünftel.

Die elektrisch leitende Schicht kann aus allen üblichen und geeigneten Materialien bestehen, etwa aus Aluminium, Kupfer, Gold, Nickel, Mu-Metall, Alnico, Permalloy, Ferrit, Kohlenstoff-Nanoröhren, Graphenen und dergleichen. Bevorzugt ist die elektrisch leitende Schicht dabei zusätzlich auch magnetisch, insbesondere ferromagnetisch oder paramagnetisch. Günstigerweise weist die elektrisch leitende Schicht dabei eine elektrische Leitfähigkeit von mehr als 20 MS/m auf (entsprechend einem spezifischen Widerstand von weniger als 50 mΩ·mm²/m), insbesondere von mehr als 40 MS/m (entsprechend einem spezifischen Widerstand von weniger als 25 mΩ·mm²/m), jeweils bestimmt für 300 K.

Zusätzlich zu der zumindest einen elektrisch leitenden Schicht kann das Flächenelement natürlich auch weitere elektrisch leitende Schichten aufweisen; diese können mit der zumindest einen elektrisch leitenden Schicht identisch oder von dieser verschieden sein, solange alle elektrisch leitenden Schichten zusammen genommen die obengenannten Bedingungen hinsichtlich einer Schichtdicke von weniger als 50 µm (für alle elektrisch leitenden Schichten zusammen) und einer Schichtdicke von mehr als einem Drittel der Gesamtdicke des Flächenelements (ebenfalls für alle elektrisch leitenden Schichten zusammen) erfüllt.

Insgesamt kann das hitzeaktiviert verklebbare Flächenelement beliebig geeignet ausgebildet sein. So kann das Flächenelement zusätzlich zu den beiden zuvor beschriebenen Schichten weitere Schichten enthalten, zum Beispiel permanente Träger oder temporäre Träger. Ferner kann das Flächenelement auf lediglich einer seiner beiden Seitenflächen verklebbar oder auf beiden Seitenflächen verklebbar ausgebildet sein, etwa als einseitig verklebbares bzw. doppelseitig verklebbares Klebeband. In letzterem Fall weist das Flächenelement zumindest eine weitere Klebemassenschicht auf, wobei diese mit der zumindest einen hitzeaktiviert verklebenden Klebemasse identisch oder von dieser verschieden sein kann. Somit kann die weitere Klebemassenschicht zum Beispiel eine hitzeaktiviert verklebende Klebemasse oder sogar eine Haftklebemasse enthalten. Auch hier muss die obige Dickenbedingung erfüllt sein, wobei bis auf einen etwaigen temporären Träger alle zusätzlichen Schichten, die nicht elektrisch leitend ausgebildet sind, zu der Gesamtdicke des Flächenelement natürlich beitragen, nicht jedoch zu der Schichtdicke der elektrisch leitenden Schicht.

Als die zumindest eine hitzeaktiviert verklebende Klebemasse können grundsätzlich alle üblichen hitzeaktiviert verklebenden Klebemassensysteme zum Einsatz gelangen. Hitzeaktiviert verklebende Klebemassen lassen sich grundsätzlich in zwei Kategorien einordnen: thermoplastische hitzeaktiviert verklebende Klebemassen (Schmelzklebstoffe) und reaktive hitzeaktiviert verklebende Klebemassen (Reaktivklebstoffe). Diese Einteilung enthält auch solche Klebemassen, die sich beiden Kategorien zuordnen lassen, nämlich reaktive thermoplastische hitzeaktiviert verklebende Klebemassen (reaktive Schmelzklebstoffe).

Thermoplastische Klebemassen basieren auf Polymeren, die bei einem Erwärmen reversibel erweichen und während des Erkaltens wieder erstarren. Im Gegensatz dazu enthalten reaktive hitzeaktiviert verklebende Klebemassen reaktive Komponenten. Letztere Bestandteile werden auch als "Reaktivharze" bezeichnet, in denen durch das Erwärmen ein Vernetzungsprozess eingeleitet wird, der nach Beendigen der Vernetzungsreaktion eine dauerhafte stabile Verbindung auch unter Druck gewährleistet. Bevorzugt enthalten derartige thermoplastische Klebemassen auch elastische Komponenten, zum Beispiel synthetische Nitrilkautschuke. Derartige elastische Komponenten verleihen der hitzeaktiviert verklebenden Klebemasse infolge ihrer hohen Fließviskosität eine auch unter Druck besonders hohe Dimensionsstabilität.

Im Folgenden sind rein exemplarisch einige typische Systeme hitzeaktiviert verklebender Klebemassen beschrieben, die sich im Zusammenhang mit der vorliegenden Erfindung als besonders vorteilhaft herausgestellt haben.

Eine thermoplastische hitzeaktiviert verklebende Klebemasse enthält also ein thermoplastisches Basispolymer. Dieses weist bereits bei geringem Anpressdruck ein gutes Fließverhalten auf, so dass sich die für die Haltbarkeit einer dauerhaften Verklebung relevante finale Klebkraft innerhalb kurzer Anpresszeit einstellt und daher ein schnelles Verkleben auch auf rauem oder anderweitig kritischem Untergrund möglich ist. Als thermoplastische hitzeaktiviert verklebende Klebemassen können alle aus dem Stand der Technik bekannten thermoplastischen Klebemassen verwendet werden.

Exemplarische Zusammensetzungen sind etwa in EP 1 475 424 A1 beschrieben. So kann die thermoplastische Klebemasse beispielsweise eine oder mehrere der folgenden Komponenten enthalten oder sogar aus diesen bestehen: Polyolefine, EthylenVinylacetat-Copolymere, Ethylen-Ethylacrylat-Copolymere, Polyamide, Polyester, Polyurethane oder Butadien-Styrol-Blockcopolymere. Bevorzugt kommen etwa die in Absatz [0027] von EP 1 475 424 A1 aufgeführten thermoplastischen Klebemassen zum Einsatz. Weitere thermoplastische Klebemassen, die insbesondere für spezielle Einsatzgebiete wie zum Beispiel das Verkleben von Verklebungssubstraten aus Glas besonders geeignet sind, sind in EP 1 95 60 63 A2 beschrieben. Bevorzugt werden thermoplastische Klebemassen verwendet, deren Schmelzviskosität durch rheologische Additive heraufgesetzt ist, beispielsweise durch Zusatz von pyrogenen Kieselsäuren, Ruß, Kohlenstoff-Nanoröhren und/oder weiteren Polymeren als Abmischkomponenten.

Eine reaktive hitzeaktiviert verklebende Klebemasse weist hingegen vorteilhafterweise ein elastomeres Basispolymer und ein Modifikationsharz auf, wobei das Modifikationsharz ein Klebharz und/oder ein Reaktivharz umfasst. Infolge der Verwendung eines elastomeren Basispolymers ist es möglich, Klebeschichten mit hervorragender Dimensionsstabilität zu erhalten. Als reaktive hitzeaktiviert verklebende Klebemassen können entsprechend den jeweiligen konkreten Anwendungen alle aus dem Stand der Technik bekannten hitzeaktiviert verklebenden Klebemassen eingesetzt werden.

Dies beinhaltet zum Beispiel auch reaktive hitzeaktiviert verklebende Folien auf Basis von Nitrilkautschuken oder deren Derivaten wie etwa Nitrilbutadienkautschuke oder Mischungen (Blends) dieser Basispolymere, die zusätzlich Reaktivharze wie etwa Phenolharze enthalten; ein derartiges Produkt ist etwa unter der Bezeichnung tesa 8401 kommerziell erhältlich. Der Nitrilkautschuk verleiht der hitzeaktiviert verklebenden Folie infolge seiner hohen Fliessviskosität eine ausgeprägte Dimensionsstabilität, wodurch sich nach Durchführen einer Vernetzungsreaktion hohe Klebkräfte auf Kunststoffoberflächen realisieren lassen.

Natürlich lassen sich auch andere reaktive hitzeaktiviert verklebende Klebemassen einsetzen wie etwa Klebemassen, die zu einem Masseanteil von 50 bis 95 Gew.-% ein verklebbares Polymer und zu einem Masseanteil von 5 bis 50 Gew.-% ein Epoxidharz oder eine Mischung aus mehreren Epoxidharzen enthalten. Das verklebbare Polymer enthält hierbei vorteilhafterweise zu 40 bis 94 Gew.-% Acrylsäureverbindungen und/oder Methacrylsäureverbindungen der allgemeinen Formel CH₂=C(R¹)(COOR²) (R¹ stellt hierbei einen Rest dar, der ausgewählt ist aus der Gruppe umfassend H und CH₃, und R² stellt einen Rest dar, der ausgewählt ist aus der Gruppe umfassend H und lineare oder verzweigte Alkylketten mit 1 bis 30 Kohlenstoffatomen), zu 5 bis 30 Gew.-% ein erstes copolymerisierbares Vinylmonomer, das zumindest eine Säuregruppe aufweist, insbesondere eine Carbonsäuregruppe und/oder Sulfonsäuregruppe und/oder Phosphonsäuregruppe, zu 1 bis 10 Gew.-% ein zweites copolymerisierbares Vinylmonomer, das zumindest eine Epoxidgruppe oder eine Säureanhydridfunktion aufweist, und zu 0 bis 20 Gew.-% ein drittes copolymerisierbares Vinylmonomer, das zumindest eine funktionelle Gruppe aufweist, die sich von der funktionellen Gruppe des ersten copolymerisierbaren Vinylmonomers und von der funktionellen Gruppe des zweiten copolymerisierbaren Vinylmonomers unterscheidet. Eine derartige Klebemasse ermöglicht ein Verkleben mit einer schnellen Aktivierung, bei der innerhalb kurzer Zeit bereits die finale Klebkraft erreicht wird, so dass hierdurch insgesamt eine gut haftende Verbindung auf unpolarem Untergrund gewährleistet ist.

Eine weitere einsetzbare reaktive hitzeaktiviert verklebende Klebemasse, die besondere Vorteile bietet, enthält zu 40 bis 98 Gew.-% ein acrylathaltiges Blockcopolymer, zu 2 bis 50 Gew.-% eine Harzkomponente und zu 0 bis 10 Gew.-% eine Härterkomponente. Die Harzkomponente enthält eines oder mehrere Harze, die gewählt werden aus der Gruppe umfassend die Klebkraft steigernde (klebrigmachende) Epoxidharze, Novolakharze und Phenolharze. Die Härterkomponente wird zum Vernetzen der Harze aus der Harzkomponente eingesetzt. Eine derartige Formulierung bietet infolge der starken physikalischen Vernetzung innerhalb des Polymers den besonderen Vorteil, dass sich Klebeschichten mit einer größeren Gesamtdicke erhalten lassen, ohne dass dabei die Belastbarkeit der Verklebung insgesamt beeinträchtigt wird. Dadurch sind diese Klebeschichten besonders geeignet, Unebenheiten im Untergrund auszugleichen. Überdies weist eine solche Klebemasse eine gute Alterungsbeständigkeit und ein nur geringes Ausgasungsverhalten auf, was bei vielen Verklebungen im Elektronikbereich besonders erwünscht ist.

Wie bereits vorstehend erwähnt, lassen sich außer diesen besonders vorteilhaften Klebemassen jedoch grundsätzlich auch alle anderen hitzeaktiviert verklebenden Klebemassen entsprechend dem jeweiligen Anforderungsprofil für die Verklebung auswählen und einsetzen.

Der erste Aspekt der Erfindung betrifft nunmehr ein Verfahren zum Verkleben solcher Flächenelemente an zumindest einem Verklebungssubstrat, das eine geringe Wärmeleitfähigkeit besitzt, das also einen Wärmeleitungskoeffizienten von höchstens 5 W/mK aufweist; dies bedeutet, dass also zumindest die Oberfläche des Fügeteils eine derartig geringe Wärmeleitfähigkeit aufweisen muss. Dazu kann die Oberfläche des Verklebungssubstrats großflächig oder teilflächig keramische Werkstoffe, polymere Werkstoffe oder Gläser aufweisen. Im Bereich der Konsumgüterelektronik werden zum Beispiel häufig Polyvinylchlorid, Acrylnitril-Butadien-Styrol, Polycarbonat, Polypropylen, Polyethylenterephthalat, Polyethylennaphthalat, Polymethylmethacrylat sowie auch Polybutylenterephthalat oder Mischungen basierend auf diesen Kunststoffen eingesetzt. Zudem kommen häufig auch nichtleitende dünne Oberflächenschichten zum Einsatz, etwa solche auf der Basis von Siliziumoxid oder Aluminiumoxid. Werden unterschiedliche Verklebungssubstrate miteinander verklebt, können die Oberflächen der Verklebungssubstrate hinsichtlich ihrer Materialien identisch, ähnlich oder verschieden ausgebildet sein. Werden unterschiedliche Verklebungssubstrate miteinander verklebt, können die Oberflächen der Verklebungssubstrate hinsichtlich ihrer Materialien identisch, ähnlich oder verschieden ausgebildet sein.

Natürlich kann das Verklebungssubstrat insgesamt beliebig geeignet gestaltet sein und zum Beispiel eine zumindest bereichsweise gleichmäßig ebene Oberfläche aufweisen, an der die Klebemassenschicht des Flächenelements verklebt werden soll. Die Oberfläche des Flächenelements kann aber auch regelmäßig oder unregelmäßig gebogen gestaltet sein, so dass das Verklebungssubstrat eine Verklebungsfläche aufweist, die dreidimensional im dreidimensionalen Raum gewölbt ist.

Zur Durchführung dieses Verfahrens wird zunächst das zuvor beschriebene hitzeaktiviert verklebbare Flächenelement bereit gestellt. Die Form des Flächenelements kann dabei an die Form der Verklebungsfläche angepasst sein, so dass das Flächenelement etwa als Zuschnitt oder Stanzling vorliegt. Dies bedeutet, dass deren Form in etwa oder exakt der Form der Verbindungsflächen der zu verbindenden Bauteile und somit an der lateralen Form der Klebefuge entspricht. Typischerweise sind bei solchen Flächenelementen die Anforderungen an Formstabilität und Verklebungsfestigkeit besonders hoch. Dadurch, dass das Flächenelement in der Geometrie der Verklebungsfläche zur Verfügung gestellt wird, ist sichergestellt, dass das Aufheizen nur in den für die Verklebung benötigten Flächenbereichen stattfindet. Somit kann die die Gefahr thermischer Schädigungen noch effektiver verringert werden. Die Formgebung des Flächenelements kann dabei mittels allen dem Fachmann geläufigen formgebenden Trennverfahren erfolgen, also etwa als Trennen nach dem Prinzip des Durchstoßens (Stanzens), des Messerschnitts, des Scherenschnittes, des Laserschnitts oder des Wasserstrahlschnitts.

Die Form des Flächenelements kann dabei insbesondere für eine offene Verklebungsflächengeometrie angepasst sein, so dass die Klebefuge zwischen dem Flächenelement und dem zumindest einen Verklebungssubstrat als eine nicht geschlossene Fläche ausgebildet ist. Dies beinhaltet Flächen, die ihrerseits von Aussparungen durchbrochen vorliegen, wie auch Flächen, die im Wesentlichen aus linienförmigen Elementen zusammengesetzt sind und daher etwa eine Kammstruktur oder Fingerstruktur besitzen. Insbesondere solche Kammstrukturen oder Fingerstrukturen sind hierbei geeignet, bei denen die einzelnen Elemente - insbesondere deren zentralen Rippenelemente sowie abzweigenden Rippenelemente - ein Verhältnis von Länge zu Breite (Aspektverhältnis) von mehr als 2 aufweisen.

Zusätzlich oder stattdessen kann die minimale Stegbreite der Verklebungsbereiche des Flächenelements (und damit auch die minimale Stegbreite des Flächenelements selber) weniger als 3 mm betragen oder sogar weniger als 2 mm. Flächenelemente mit derartig dünnen minimalen Stegbreiten lassen sich mit den bislang bekannten Induktionsverklebungsverfahren nicht ohne weiteres verkleben. Besonders vorteilhaft ist der Einsatz des erfindungsgemäßen Verfahrens, wenn die erwärmte Fläche, an der das hitzeaktiviert verklebbare Flächenelement mit dem zumindest einen Verklebungssubstrat oder mit allen Verklebungssubstraten in Kontakt steht, sehr klein ist, also kleiner als 5 cm² ist. Auch bei derartig filigranen Verklebungssubstraten kann durch das Verfahren ein unkontrolliertes Aufschmelzen der Klebemasse vermieden werden.

Zum Verbinden wird das Verklebungssubstrat mit einem Seitenflächenabschnitt des hitzeaktiviert verklebbaren Flächenelements in Kontakt gebracht, so dass ein Teil oder die gesamte Fläche einer der beiden Seitenflächen einen Bereich der Oberfläche des Verklebungssubstrats berührt, wodurch ein Vorverbund gebildet wird, also ein temporär bestehender Verbund vor dem eigentlichen abschließenden Verbinden.

Dieser Vorverbund wird für eine Dauer von höchstens 20 s einem Magnet-Wechselfeld einer Mittelfrequenz ausgesetzt, also einer Frequenz von mindestens 100 Hz und höchstens 200 kHz, und dadurch in diesem Magnet-Wechselfeld induktiv erwärmt. Magnet-Wechselfelder dieser Frequenzen bieten eine hinreichend geeignete Eindringtiefe, wobei aus diesem Grund bevorzugt Magnet-Wechselfelder mit Frequenzen von 1 kHz bis 40 kHz eingesetzt werden, insbesondere von weniger als 15 kHz, wodurch die wirksame Eindringtiefe des Magnetfelds insgesamt erhöht werden kann, ohne dass dafür ein erhöhter apparativer Aufwand erforderlich ist. Infolge der induktiven Erwärmung wird die zumindest eine hitzeaktiviert verklebende Klebemasse aktiviert, die sich im Kontakt mit dem zumindest einen Verklebungssubstrat befindet, wodurch ein Endverbund gebildet wird (also ein mittels Verklebung erhaltener Verbund aus einem Flächenelement und mindestens einem Verklebungssubstrat, das direkt mit einer Seitenfläche des Flächenelements verbunden ist). Die Maximaldauer von 20 s ist hierbei erforderlich, um hinreichend hohe Erwärmungsgeschwindigkeiten und somit auch eine hohe Verfahrensgeschwindigkeit zu gewährleisten.

Zur Realisierung des erfinderischen Konzepts konnte optional der Vorverbund während des induktiven Erwärmens mit einem Druck von mindestens 1 MPa beaufschlagt werden, bevorzugt sogar von mindestens 3 MPa. Dieser Druck spiegelt eine Kraft oder Kraftkomponente wieder, die senkrecht zu einem Seitenflächenabschnitt des hitzeaktiviert verklebbaren Flächenelements auf das Flächenelement einwirkt. Eine derartig senkrecht einwirkende Kraft ist jede Kraft, die auf das Flächenelement senkrecht zu einer Fläche einwirkt, die innerhalb der äußeren Begrenzungen des Flächenelements aufgespannt wird. Somit kann bei einem Flächenelement, dessen Verklebungsfläche dreidimensional im dreidimensionalen Raum ausgebildet ist, die Richtung, aus der die Kraft auf das Flächenelement einwirkt, lokal innerhalb einzelner Bereiche der tatsächlichen Verklebungsfläche auch von der senkrechten Richtung abweichen, obgleich die Krafteinwirkung insgesamt senkrecht erfolgt, bezogen auf eine von der äußeren Umrandung des Flächenelements aufgespannten hypothetischen Wirkfläche des Flächenelements. Lediglich der Vollständigkeit halber sei darauf hingewiesen, dass die einwirkende Kraft zudem auch Komponenten aufweisen kann, die nicht senkrecht zur Wirkfläche einwirken, solange zusätzlich auch senkrecht einwirkende Komponenten vorhanden sind.

Bei dieser Verfahrensführung stellt sich zudem ein weiterer vorteilhafter Effekt ein: Niedermolekulare Verbindungen, zum Beispiel Wasser oder Gase wie etwa Luft, die bei Raumtemperatur in der Polymermatrix der hitzeaktiviert verklebenden Klebemassenschicht adsorbiert vorliegen, desorbieren üblicherweise, wenn die Klebemasse auf die Aktivierungstemperatur erhitzt wird. Die desorbierten niedermolekularen Verbindungen verteilen sich dabei in der Klebemassenschicht in Form von Blasen, so dass die Klebemasse unerwünschterweise aufgeschäumt wird. Die Freisetzung niedermolekularer Verbindungen unter diesen Bedingungen ist überdies noch problematischer, wenn die zumindest eine hitzeaktiviert verklebende Klebemassenschicht eine Reaktivklebemasse enthält, in der eine thermisch induzierte Vernetzungsreaktion in Form einer Polykondensationsreaktion abläuft. Hierbei werden aus dem Polymernetzwerk der Klebemasse als Nebenprodukte der Vernetzungsreaktion niedermolekulare Verbindungen abgespalten, die bei den jeweils gewählten Aktivierungstemperaturen gasförmig vorliegen, beispielsweise als Wasserdampf.

Die hierbei freigesetzten Mengen an gasförmigem oder flüssigem Fluid können beträchtlich sein: So können hitzeaktiviert verklebende Klebemassen auf der Basis von Copolyamiden etwa Wasser zu einem Masseanteil von einigen Prozent enthalten, das an das Makromolekülnetzwerk adsorbiert ist und beim Erhitzen teilweise entweicht. Dabei kommt es zu einem Aufschäumen oder einer Blasenbildung innerhalb der Klebemasse, was wiederum eine Verringerung von Adhäsion und Kohäsion dieser Klebemasse insgesamt zur Folge hat; dies gilt es daher zu vermeiden.

Bei hitzeaktiviert verklebenden Klebemassen wurde beobachtet, dass bei einem Pressdruck von mehr als 0,2 MPa eine Blasenbildung durch desorbierende oder in einer chemischen Reaktion entstehende gasförmige Fluide wie etwa Wasserdampf vermieden wird, wobei sich für hohe Vernetzungstemperaturen ein Druck von mehr als 0,5 MPa als erforderlich herausgestellt hat. Insoweit der eingesetzte Druck größer ist als diese Werte, wird also einer Blasenbildung innerhalb der Klebemassenschicht entgegengewirkt. Es sei jedoch darauf hingewiesen, dass für niederviskose Klebemassen (zum Beispiel Flüssigklebstoffe) sowie für einige bei niedrigen Temperaturen schmelzende thermoplastische Klebemassen bei einem Druck oberhalb von 0,2 MPa die Klebemasse aus der Klebefuge heraus fließt und somit für einzelne Anwendungen des erfindungsgemäßen Verfahrens unter Umständen weniger geeignet sein kann.

Grundsätzlich kann die Aufheizgeschwindigkeit beim induktiven Erwärmen beliebig gewählt werden, wobei sich allerdings Aufheizgeschwindigkeiten von mindestens 2,5 °C/s und höchstens 200 °C/s als vorteilhaft herausgestellt haben, insbesondere von mindestens 10 °C/s und höchstens 100 °C/s. Durch die Begrenzung der Aufheizgeschwindigkeiten nach oben wird die mit der Aufheizgeschwindigkeit ansteigende Gefahr einer thermischen Schädigung der Klebemassen und/oder des Verklebungssubstrats sowie das Risiko eines unkontrollierten Aufschmelzens der Klebemassen verringert. Eine derartige Begrenzung der Aufheizgeschwindigkeit nach oben kann zum Beispiel auf einfache Weise durch Verwenden einer elektrisch leitenden Schicht erreicht werden, die aus einem den elektrischen Strom schlecht leitenden Metall besteht, also durch den Einsatz von Aluminium anstelle von Kupfer oder sogar von Nickel anstelle von Aluminium.

Ein weiterer einfacher Weg, die Aufheizgeschwindigkeit nach oben hin zu begrenzen, besteht darin, als elektrisch leitende Schicht flächenförmig ausgebreitete metallische Gebilde einzusetzen, die in ihrer Flächenausdehnung diskontinuierlich unterbrochen oder durchbrochen sind, also zum Beispiel Streckmetall, Drahtgewebe, Drahtgeflecht, Bändchengewebe, Bändchengeflecht sowie gelochte oder geschlitzte Metallfolien.

Zum Verkleben kann erfindungsgemäß die gesamte Verklebungsfläche des Flächenelements gleichzeitig induktiv erwärmt werden, was insbesondere bei einer kleinen Verklebungsfläche mit kompakter Geometrie sinnvoll sein kann, etwa bei einer kleinflächig-kreisförmigen Verklebungsfläche. Stattdessen ist es aber auch möglich, nur einen Teil der gesamten Verklebungsfläche des Flächenelements gleichzeitig induktiv zu erwärmen, was insbesondere bei einer großen Verklebungsfläche mit offener Geometrie sinnvoll sein kann.

Wird nur ein Teil der gesamten Verklebungsfläche des Flächenelements gleichzeitig erwärmt, so lässt sich dies etwa erreichen, indem die Lage des Vorverbunds relativ zu der Lage des Induktors und der Pressvorrichtung geändert wird; bei einem kleinen Vorverbund wird vorzugsweise der Vorverbund an einer ortsfest installierten Anordnung aus Induktor und Pressvorrichtung kontinuierlich oder diskontinuierlich vorbei geführt, bei einem großen Vorverbund kann aber auch die Anordnung mit dem Induktor und der Pressvorrichtung an dem festen Vorverbund kontinuierlich oder diskontinuierlich vorbei geführt werden.

Infolge dieser Relativbewegung wird ein zeitliches und räumliches Erwärmungsprofil erhalten, dessen Parameter entsprechend der jeweiligen Geometrie des herzustellenden Endverbunds sowie dessen späteren Einsatzzweck gewählt werden können.

Wird die induktive Erwärmung nun so durchgeführt, dass jeweils das gesamte Flächenelement gleichzeitig erwärmt wird, dann hat es sich als besonders günstig herausgestellt, wenn zu jedem Zeitpunkt während des induktiven Erwärmens die erwärmte Verklebungsfläche einen großen Teil des erwärmten Bereichs des Flächenelements ausmacht. Dies ist der Fall, wenn zusätzlich zu den zur Verklebung beitragenden Bereichen jeweils nur wenige Bereiche des Flächenelements erwärmt werden, die nicht zur Verklebung beitragen. Von Vorteil ist es dabei, wenn das Verhältnis zwischen der Fläche des Bereichs des hitzeaktiviert verklebbaren Flächenelements, der zu einem Zeitpunkt jeweils induktiv erwärmt wird (also die jeweils gleichzeitig erwärmten Bereiche des Flächenelements, die in der Verklebung zur Verklebung beitragen und die in der Verklebung nicht zur Verklebung beitragen), und der Verklebungsfläche in diesem Bereich (also die jeweils gleichzeitig erwärmten zur Verklebung beitragenden Bereiche des Flächenelements) weniger als 2 : 1 beträgt, insbesondere weniger als 1,5 : 1 oder sogar weniger als 1,2 : 1. Dadurch nehmen in dem jeweils gleichzeitig erwärmten Bereich des Flächenelements die nicht zur Verklebung beitragenden Bereiche höchstens dieselbe Fläche ein wie die zur Verklebung beitragenden Bereiche, bevorzugt weniger als die Hälfte oder sogar nur ein Fünftel der Fläche der zur Verklebung beitragenden Bereiche.

Weist das hitzeaktiviert verklebbare Flächenelement nur eine einzige hitzeaktiviert verklebende Klebemassenschicht auf, so kann das Flächenelement an der Oberfläche des Verklebungssubstrats derart angeordnet sein, dass es dieses mit einem weiteren Verklebungssubstrat brückenartig verbindet. Weist das hitzeaktiviert verklebbare Flächenelement hingegen zusätzlich zu der zumindest einen hitzeaktiviert verklebenden Klebemassenschicht eine weitere Klebemassenschicht auf, so kann die weitere Klebemassenschicht bereits vor dem Ausbilden des Vorverbunds mit einem weiteren Verklebungssubstrat verbunden werden und mit dem weiteren Verklebungssubstrat also eine dauerhafte Verklebung in Form eines Vor-Vorverbunds eingehen. Alternativ kann bei Vorhandensein einer weiteren hitzeaktiviert verklebenden Klebemassenschicht auch zuerst der Vorverbund gebildet werden und dieser dann vor dem induktiven Erwärmen mit einem weiteren Verklebungssubstrat in Kontakt gebracht werden, indem die weitere hitzeaktiviert verklebende Klebemassenschicht des hitzeaktiviert verklebbaren Flächenelements des Vorverbunds mit dem weiteren Verklebungssubstrat in Kontakt gebracht wird.

Im Vorverbund kann die Verbindung zwischen der weiteren hitzeaktiviert verklebenden Klebemassenschicht und dem weiteren Verklebungssubstrat locker und noch nicht dauerhaft sein, die dann beim abschließenden induktiven Erhitzen zusammen mit der zumindest einen hitzeaktiviert verklebenden Klebemassenschicht thermisch aktiviert wird. Alternativ kann diese Verbindung aber auch bereits dauerhaft fest sein, was sich etwa realisieren lässt, wenn die zumindest eine hitzeaktiviert verklebende Klebemassenschicht von der weiteren hitzeaktiviert verklebenden Klebemassenschicht verschieden ist und dabei die Aktivierungstemperatur der zumindest einen hitzeaktiviert verklebenden Klebemassenschicht höher ist als die Aktivierungstemperatur der weiteren hitzeaktiviert verklebenden Klebemassenschicht. Zum Herstellen des Vorverbunds kann dann zunächst die weitere hitzeaktiviert verklebende Klebemassenschicht mit dem weiteren Verklebungssubstrat in Kontakt gebracht und der so entstehende lose Vor-Vorverbund aus Flächenelement und dem weiteren Verklebungssubstrat mittels einer Heizungseinrichtung erhitzt werden, die nicht induktiv arbeitet, etwa mit einem herkömmlichen Ofen, einem Wärmestrahler oder einer Kontaktheizung. Dabei wird der Vor-Vorverbund auf eine Temperatur erhitzt, bei der die weitere hitzeaktiviert verklebende Klebemassenschicht bereits thermisch aktiviert wird, nicht aber die zumindest eine hitzeaktiviert verklebende Klebemassenschicht.

Ferner können weitere Verfahrensschritte den Schritten des erfindungsgemäßen Verfahrens vorausgehen, diesen nachfolgen oder zwischen zwei Schritten des erfindungsgemäßen Verfahrens durchgeführt werden. Beispielsweise kann der zuvor beschriebene optionale Druck auch nach Beendigung des induktiven Erwärmens für eine Nachpressdauer aufrecht erhalten werden, etwa während des Ablaufs einer thermisch aktivierten Vernetzungsreaktion oder zum Fixieren der Fügeteile während des Abkühlens der Klebemasse, um also eine Verfestigung der Klebefuge durch physikalische oder chemische Effekte zu ermöglichen. Während dieser Nachpressdauer kann der bereits gebildete Endverbund nicht erhitzt werden (so dass zum Nachpressen dann eine weitere Pressvorrichtung eingesetzt werden kann, die selber keinen Induktor aufweist, wodurch infolge der Verwendung einer weiteren Pressvorrichtung die Zykluszeit reduziert werden kann), mittels einer externen Kühleinheit gekühlt werden oder während zumindest eines Teils der Nachpressdauer erneut erwärmt werden, beispielsweise im Rahmen einer weiteren induktiven Erwärmung. Hierbei lässt sich die Temperatur in der Klebefuge aufrecht erhalten, wobei die Nacherwärmung mit einer geringeren Aufheizgeschwindigkeit oder bei einer niedrigeren Temperatur durchgeführt werden kann als die Ersterwärmung.

Die über das Magnetfeld eingebrachte Leistung lässt sich auf unterschiedliche Weise beeinflussen, wobei grundsätzlich alle geeigneten Methoden eingesetzt werden können. So kann zum Beispiel die Stärke des durch die Erzeugerwicklung fließenden Stroms entsprechend angepasst werden. In der Praxis hat es sich ferner als vorteilhaft herausgestellt, das Magnet-Wechselfeld regelmäßig unterbrochen (intermittierend) zu betreiben und so die effektive Wirkzeit des magnetischen Wechselfeldes zu beeinflussen. Hierbei wird das Magnet-Wechselfeld "gepulst", also zyklisch eingeschaltet und abgeschaltet. Typischerweise beträgt die Pulsdauer des Magnet-Wechselfelds beim induktiven Erwärmen weniger als 1 s, insbesondere weniger als 0,1 s, und die Pausendauer zwischen zwei Pulsen beträgt weniger als 1 s, insbesondere weniger als 0,1 s. Durch einen pulsartig intermittierenden Betrieb kann eine äußerst homogene Erwärmung erreicht und ein lokales Überhitzen vermindert oder sogar vollständig vermieden werden.

Das erfindungsgemäße Verfahren wird bevorzugt zum Verkleben von Baueinheiten elektronischer Geräte eingesetzt, etwa solche aus dem Bereich der Konsumgüterelektronik, Unterhaltungselektronik oder Kommunikationselektronik (zum Beispiel für Mobiltelefone, PDAs, Laptops und andere Rechner, Digitalkameras und Anzeigegeräte wie etwa Displays, Digitalreader oder organische Leuchtdiodendisplays (OLEDs) sowie für Solarzellenmodule wie etwa elektrochemische Farbstoff-Solarzellen, organische Solarzellen oder Dünnschichtzellen). Als Baueinheiten werden vorliegend alle Bestandteile und Ansammlungen derselben verstanden, die in elektronischen Geräten verwendet werden, beispielsweise elektronische Bauteile (diskrete und integrierte Bauelemente), Gehäuseteile, elektronische Module, Antennen, Anzeigefelder, Schutzscheiben, unbestückte und/oder bestückte Platinen und dergleichen.

Das Verfahren lässt sich unter Verwendung eines zum induktiven Erwärmen üblichen Induktionsheizmittel (Induktors) durchführen. Als Induktionsheizungsmittel (Induktor) kommen alle üblichen und geeigneten Anordnungen in Frage, also etwa von einem elektrischen Wechselstrom durchflossene Spulen, Leiterschleifen oder Leiter, die infolge des hindurchfließenden Stroms ein Magnet-Wechselfeld geeigneter Stärke erzeugen. So kann die zum Erwärmen erforderliche Magnetfeldstärke durch eine Spulenanordnung von entsprechender Wicklungszahl und Spulenlänge bereit gestellt werden, die von einem entsprechenden Strom durchflossen ist, beispielsweise als Punktinduktor. Diese kann ohne ferromagnetischen Kern ausgebildet sein oder aber einen Kern aufweisen, beispielsweise aus Eisen oder gepresstem Ferritpulver. Der Vorverbund kann dem so erzeugten Magnetfeld direkt ausgesetzt sein. Alternativ ist es natürlich auch möglich, obige Spulanordnung als Primärwicklung auf der Primärseite eines Magnetfeldübertragers (Transformator) anzuordnen, auf dessen Sekundärseite eine Sekundärwicklung einen entsprechend höheren Strom bereitstellt. Dadurch kann die in der unmittelbaren Nähe des Vorverbunds angeordnete eigentliche Erregerspule infolge des höheren Stroms eine geringere Zahl an Windungen aufweisen, ohne dass dadurch die Feldstärke des Magnet-Wechselfeldes verringert wird.

Für den Fall, dass der Vorverbund während des induktiven Erwärmens mit einem Pressdruck beaufschlagt wird, ist hierfür zusätzlich eine Pressvorrichtung erforderlich. Als Pressvorrichtung können alle zum Ausüben eines Pressdrucks geeigneten Vorrichtungen eingesetzt werden, zum Beispiel diskontinuierlich arbeitende Pressmaschinen wie etwa eine Pneumatik- oder Hydraulikpresse, eine Exzenterpresse, eine Kurbelpresse, eine Kniehebelpresse, eine Spindelpresse oder dergleichen, oder auch kontinuierlich arbeitende Pressmaschinen wie etwa eine Presswalze. Die Vorrichtung kann als separate Einheit vorgesehen sein oder aber mit dem Induktor verbunden vorliegen. Bevorzugt kommt etwa eine Vorrichtung zum Einsatz, die als erstes Presswerkzeug zumindest ein Pressstempelelement enthält, das zudem ein Induktionsheizungsmittel aufweist. Dadurch kann das Induktionsfeld sehr nah an die zu bildende Verklebungsstelle herangeführt werden und somit auch räumlich auf die Fläche dieser Verklebungsstelle begrenzt werden.

Im Folgenden werden ergänzend allgemeine Ausführungen einer solchen kombinierten Vorrichtung mit zumindest einem Pressstempelelement und zumindest einem darin integrierten Induktionsheizungsmittel beschrieben. Als Pressstempelelemente werden alle Baugruppen verstanden, die in der Lage sind, einen definierten Druck auf eine Fläche auszuüben. Pressstempelelemente können den Druck kontinuierlich (etwa als Walze) oder diskontinuierlich (etwa als Pressenstößel) ausüben, wobei der ausgeübte Druck zeitlich konstant sein oder einem festgelegten zeitlichen Verlauf folgen kann. Die Vorrichtung kann dabei für eine Presskraft von zumindest 300 N angepasst sein, insbesondere von mindestens 600 N.

Zum Ausüben eines entsprechenden Drucks benötigt das zumindest eine Pressstempelelement ein Gegenlager als zweites Presswerkzeug; dieses Gegenlager kann entweder passiv ausgebildet sein (etwa als Festlager) oder aber aktiv am Aufbau des Druckes mitwirken, etwa als ein weiteres Pressstempelelement. Die Oberfläche des zumindest einen Pressstempelelements kann dabei der zu erzielenden Form der Verklebung entsprechend ausgestaltet sein und somit beispielsweise eine plane Pressfläche oder aber eine zumindest bereichsweise im dreidimensionalen Raum gewölbte Pressfläche aufweisen, also zumindest in einem Teilbereich oder in mehreren Teilbereichen der Pressfläche. Die gewölbte Pressfläche sollte dabei zu der Form des jeweiligen Bereichs des Vorverbunds komplementär ausgebildet sein. Auf diese Weise können außer flächig-planen Verklebungen auch Verklebungen mit dreidimensional ausgeformten Verklebungsflächen erhalten werden, so dass überdies komplexe Verklebungsgeometrien zugänglich sind.

Vorteilhafterweise weist bei einer Druckbeaufschlagung das Gegenlager (also etwa das Festlager oder das weitere Pressstempelelement) zumindest einen ferromagnetischen, ferrimagnetischen, paramagnetischen oder diamagnetischen Jochabschnitt - bevorzugt einen ferrimagnetischen Jochabschnitt - und zusätzlich dazu oder stattdessen ein weiteres Induktionsheizungsmittel auf. Dies hat bei entsprechender Anordnung den Effekt, die Eindringtiefe des Magnetfeldes zu erhöhen und somit ein gleichmäßiges Erwärmen zu bieten, so dass die Verklebung über die gesamte Verklebungsfläche auch bei einer Aufwölbung im dreidimensionalen Raum homogen ausgebildet wird. Dadurch können insbesondere Verklebungen mit komplexen Verklebungsgeometrien homogen erhitzt werden und somit eine über die gesamte Verklebungsfläche gleichmäßige Adhäsion und Kohäsion bieten. Eine lokal wirkende Verstärkung des Magnet-Wechselfelds ließe sich aber auch durch den Einsatz des weiteren Induktionsheizungsmittels erreichen.

Ein solcher Jochabschnitt kann beispielsweise aus einem ferritartigen Material gebildet werden, das in das weitere Pressstempelelement integriert wurde und das das Magnetfeld lokal anzieht, auf den konkreten Verklebungsbereich konzentriert und somit dessen Eindringtiefe erhöht. Das Joch kann dabei so angeordnet werden, dass es das Magnetfeld nur in dem Bereich anzieht, in dem eine besonders große Eindringtiefe benötigt wird, etwa, indem die Form des Jochabschnitts an die Form der zu erzielenden Verklebungsfläche angepasst ist. Durch Einsatz eines derartigen Jochabschnitts wird einerseits die laterale Ausdehnung des Erwärmungsfeldes begrenzt, andererseits aber auch eine hinreichende Eindringtiefe des Magnetfelds in die zu verbindenden Verklebungssubstrate bereit gestellt, so dass technisch sinnvolle Erwärmungsgeschwindigkeiten erreicht werden. Dadurch lassen sich insbesondere auch Verklebungen mit Geometrien, die im Wesentlichen eckig und kleinflächig ausgebildet sind, mit hoher Homogenität und daraus resultierender hoher Festigkeit herstellen. Solche eckigen Verklebungsstrukturen mit Eckenradien von weniger als 5 mm können mit herkömmlichen Verfahren zum induktiven Erwärmen nicht gleichmäßig überhitzungsfrei und somit zerstörungsarm erzeugt werden, so dass die bisher bekannten Verklebungen üblicherweise im Wesentlichen runde oder zumindest stark abgerundete Geometrien aufweisen.

Eine Verstärkung des lokal wirkenden Magnet-Wechselfelds in der Klebefuge lässt sich überdies auch mittels eines weiteren Induktionsheizungsmittels in dem weiteren Pressstempelelement erzielen. Hierzu ist es sinnvoll, die Phasenlage dieses Magnet-Wechselfeldes des weiteren Induktionsheizungsmittels mit der Phasenlage des Magnet-Wechselfeldes des zumindest einen Induktionsheizungsmittels abzustimmen oder sogar zu synchronisieren, so dass sich die Magnetfelder nicht gegenseitig aufheben und dadurch schwächen, sondern vielmehr verstärken.

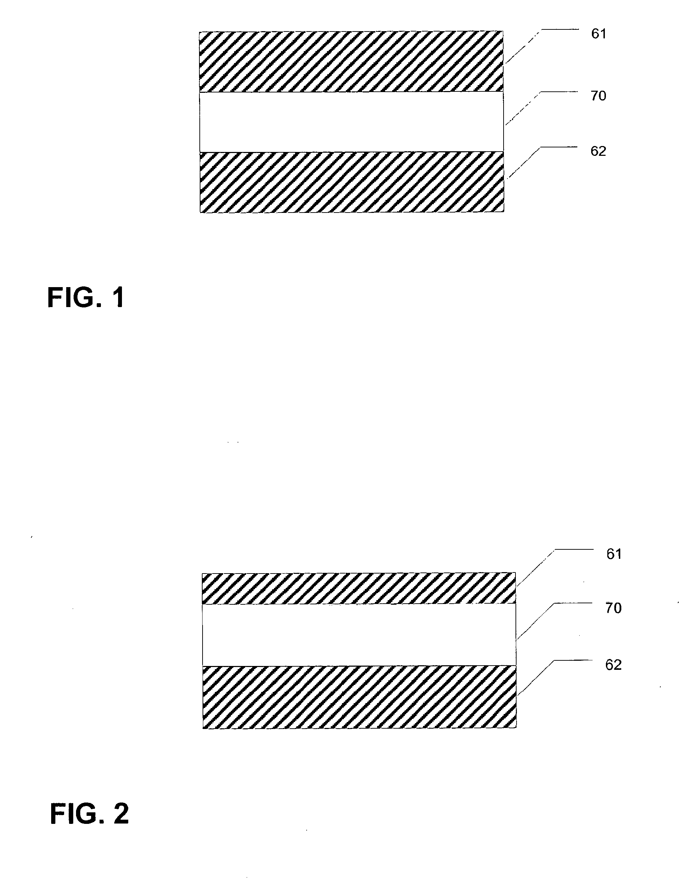

Weitere Vorteile und Anwendungsmöglichkeiten gehen aus den Ausführungsbeispielen und den Untersuchungsergebnissen hervor, die anhand der beigefügten Zeichnungen im Folgenden näher beschrieben werden sollen. Dabei zeigt
Fig. 1 schematisch einen Längsschnitt durch eine Ausführung des erfindungsgemäßen hitzeaktiviert verklebbaren Flächenelements, bei dem das Verhältnis der Schichtdicke der elektrisch leitenden Schicht zu dessen Gesamtdicke ein Drittel beträgt;
Fig. 2 schematisch einen Längsschnitt durch eine weitere Ausführung des erfindungsgemäßen hitzeaktiviert verklebbaren Flächenelements, bei dem das Verhältnis der Schichtdicke der elektrisch leitenden Schicht zu dessen Gesamtdicke 0,4 beträgt;

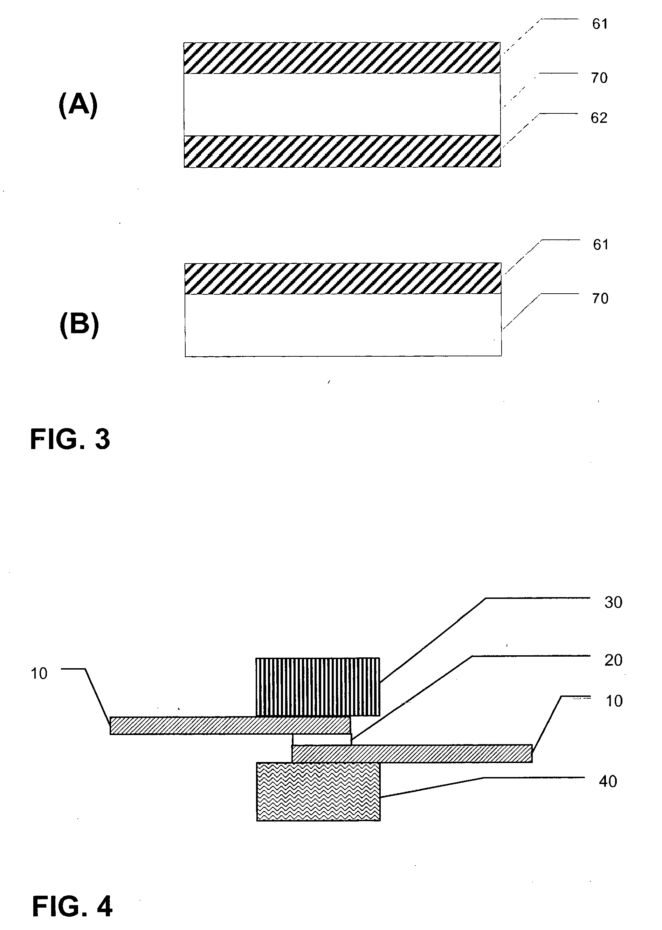

Fig. 3 schematisch Längsschnitte durch zwei weitere Ausführungen des erfindungsgemäßen hitzeaktiviert verklebbaren Flächenelements, nämlich ein zweiseitig verklebbares Flächenelement, bei dem das Verhältnis der Schichtdicke der elektrisch leitenden Schicht zu dessen Gesamtdicke 0,5 beträgt (A), und ein einseitig verklebbares Flächenelement, bei dem das Verhältnis der Schichtdicke der elektrisch leitenden Schicht zu dessen Gesamtdicke 0,667 beträgt (B);
Fig. 4 schematisch einen Längsschnitt durch einen Versuchsaufbau zur Durchführung des erfindungsgemäßen Verfahrens, der zur Untersuchung des erfindungsgemäßen Prinzips eingesetzt wurde;

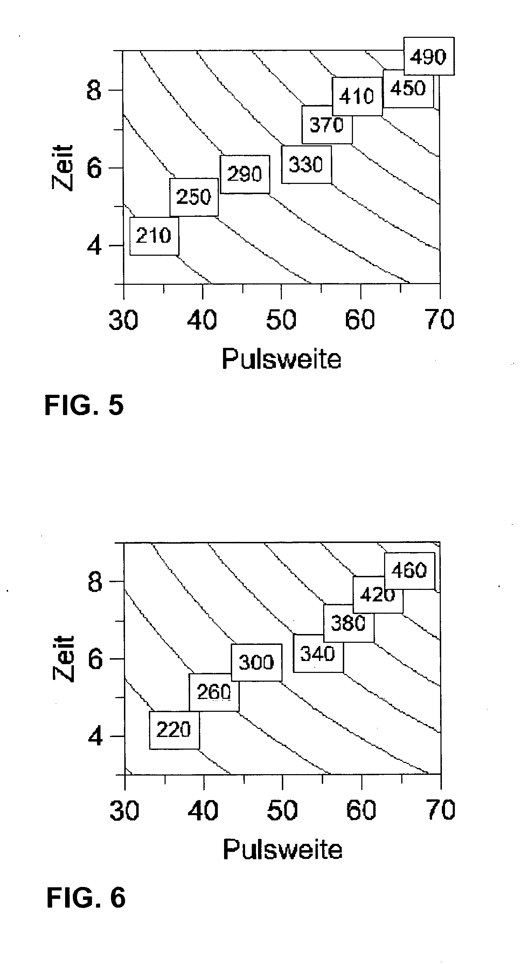

Fig. 5 ein Konturdiagramm der erzielten Verklebungsfestigkeit in Abhängigkeit von der Pulsweite eines intermittierend wirkenden Magnet-Wechselfelds und der Einwirkungsdauer des Magnet-Wechselfelds, das für ein erfindungsgemäßes hitzeaktiviert verklebbares Flächenelement erhalten wurde, bei dem das Verhältnis der Schichtdicke der elektrisch leitenden Schicht zu dessen Gesamtdicke 0,64 betrug (Probe 1);
Fig. 6 ein Konturdiagramm der erzielten Verklebungsfestigkeit in Abhängigkeit von der Pulsweite eines intermittierend wirkenden Magnet-Wechselfelds und der Einwirkungsdauer des Magnet-Wechselfelds, das für ein erfindungsgemäßes hitzeaktiviert verklebbares Flächenelement erhalten wurde, bei dem das Verhältnis der Schichtdicke der elektrisch leitenden Schicht zu dessen Gesamtdicke 0,55 betrug (Probe 2);

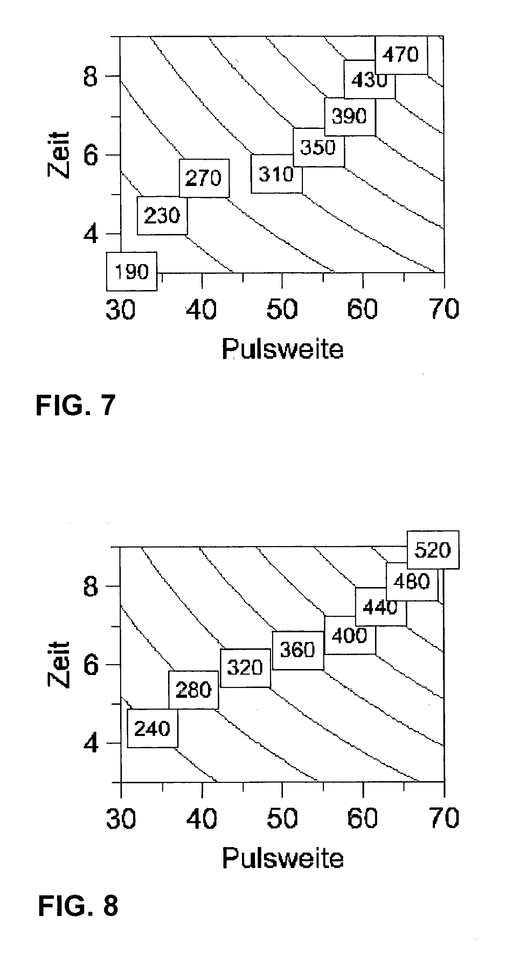

Fig. 7 ein Konturdiagramm der erzielten Verklebungsfestigkeit in Abhängigkeit von der Pulsweite eines intermittierend wirkenden Magnet-Wechselfelds und der Einwirkungsdauer des Magnet-Wechselfelds, das für ein nicht-erfindungsgemäßes hitzeaktiviert verklebbares Flächenelement erhalten wurde, bei dem das Verhältnis der Schichtdicke der elektrisch leitenden Schicht zu dessen Gesamtdicke 0,38 betrug (Vergleichsprobe 1);
Fig. 8 ein Konturdiagramm der erzielten Verklebungsfestigkeit in Abhängigkeit von der Pulsweite eines intermittierend wirkenden Magnet-Wechselfelds und der Einwirkungsdauer des Magnet-Wechselfelds, das für ein nicht-erfindungsgemäßes hitzeaktiviert verklebbares Flächenelement erhalten wurde, bei dem das Verhältnis der Schichtdicke der elektrisch leitenden Schicht zu dessen Gesamtdicke 0,23 betrug (Vergleichsprobe 2);

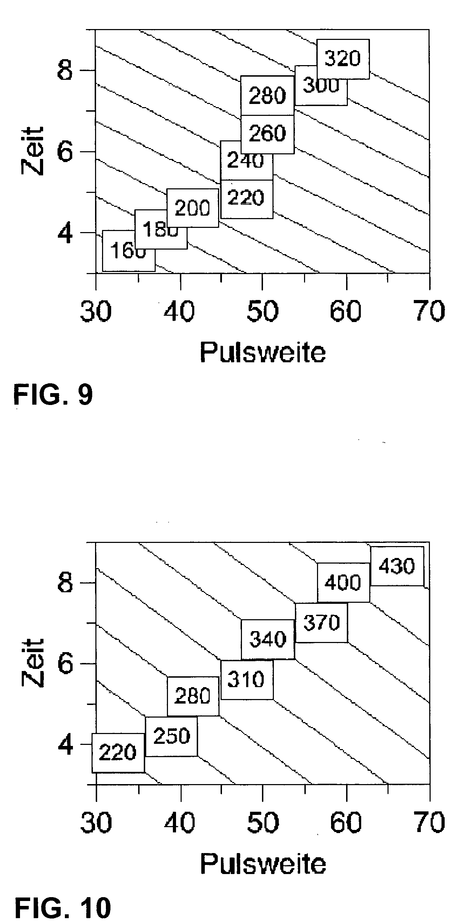

Fig. 9 ein Konturdiagramm der erzielten Verklebungsfestigkeit in Abhängigkeit von der Pulsweite eines intermittierend wirkenden Magnet-Wechselfelds und der Einwirkungsdauer des Magnet-Wechselfelds, das für ein erfindungsgemäßes hitzeaktiviert verklebbares Flächenelement erhalten wurde, bei dem das Verhältnis der Schichtdicke der elektrisch leitenden Schicht zu dessen Gesamtdicke ein Drittel betrug (Probe 3);
Fig. 10 ein Konturdiagramm der erzielten Verklebungsfestigkeit in Abhängigkeit von der Pulsweite eines intermittierend wirkenden Magnet-Wechselfelds und der Einwirkungsdauer des Magnet-Wechselfelds, das für ein erfindungsgemäßes hitzeaktiviert verklebbares Flächenelement erhalten wurde, bei dem das Verhältnis der Schichtdicke der elektrisch leitenden Schicht zu dessen Gesamtdicke 0,43 betrug (Probe 4);

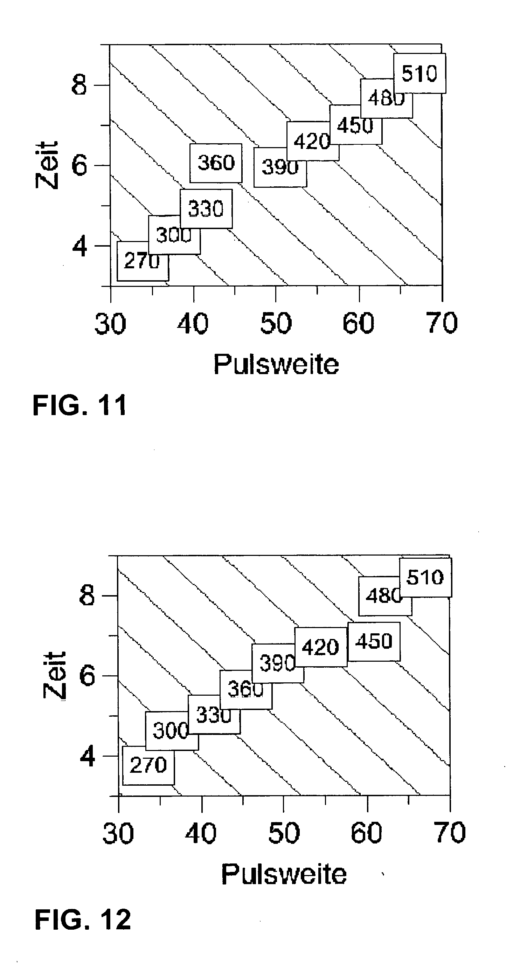

Fig. 11 ein Konturdiagramm der erzielten Verklebungsfestigkeit in Abhängigkeit von der Pulsweite eines intermittierend wirkenden Magnet-Wechselfelds und der Einwirkungsdauer des Magnet-Wechselfelds, das für ein erfindungsgemäßes hitzeaktiviert verklebbares Flächenelement erhalten wurde, bei dem das Verhältnis der Schichtdicke der elektrisch leitenden Schicht zu dessen Gesamtdicke 0,5 betrug (Probe 5);
Fig. 12 ein Konturdiagramm der erzielten Verklebungsfestigkeit in Abhängigkeit von der Pulsweite eines intermittierend wirkenden Magnet-Wechselfelds und der Einwirkungsdauer des Magnet-Wechselfelds, das für ein nicht-erfindungsgemäßes hitzeaktiviert verklebbares Flächenelement erhalten wurde, bei dem das Verhältnis der Schichtdicke der elektrisch leitenden Schicht zu dessen Gesamtdicke 0,25 betrug (Vergleichsprobe 3); und

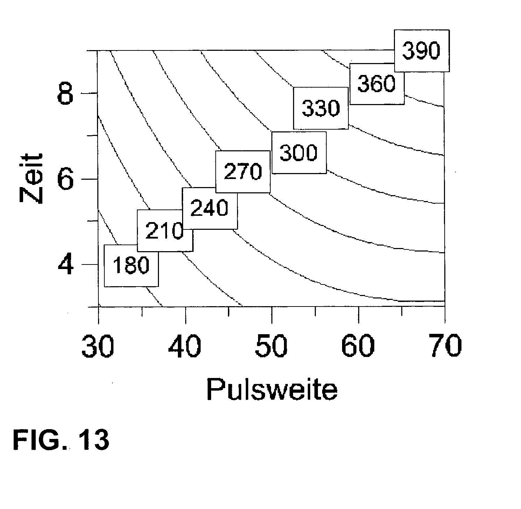

Fig. 13 ein Konturdiagramm der erzielten Verklebungsfestigkeit in Abhängigkeit von der Pulsweite eines intermittierend wirkenden Magnet-Wechselfelds und der Einwirkungsdauer des Magnet-Wechselfelds, das für ein erfindungsgemäßes hitzeaktiviert verklebbares Flächenelement erhalten wurde, bei dem das Verhältnis der Schichtdicke der elektrisch leitenden Schicht zu dessen Gesamtdicke 0,7 betrug (Probe 6).

In Fig. 1 ist ein Längsschnitt durch ein hitzeaktiviert verklebbares Flächenelement gemäß der vorliegenden Erfindung schematisch dargestellt. Das hitzeaktiviert verklebbare Flächenelement weist eine obere hitzeaktiviert verklebende Klebemassenschicht 61, eine elektrisch leitende Schicht 70 und eine untere hitzeaktiviert verklebende Klebemassenschicht 62 auf. Die obere hitzeaktiviert verklebende Klebemassenschicht 61 ist an der oberen Seitenfläche der elektrisch leitenden Schicht 70 angeordnet und die untere hitzeaktiviert verklebende Klebemassenschicht 62 ist an der unteren Seitenfläche der elektrisch leitenden Schicht 70 angeordnet. Die obere hitzeaktiviert verklebende Klebemassenschicht 61 und die untere hitzeaktiviert verklebende Klebemassenschicht 62 können gleich oder verschieden ausgebildet sein. Beide Klebemassenschichten besitzen hier dieselbe Schichtdicke. Das Verhältnis der Schichtdicke der elektrisch leitenden Schicht 70 zu der Gesamtdicke des hitzeaktiviert verklebbaren Flächenelements beträgt hier 0,333, das heißt, dass die elektrisch leitende Schicht 70 ein Drittel der Gesamtdicke des Flächenelements ausmacht.

In Fig. 2 ist ein Längsschnitt durch ein weiteres hitzeaktiviert verklebbares Flächenelement gemäß der vorliegenden Erfindung schematisch dargestellt. Das hitzeaktiviert verklebbare Flächenelement weist eine obere hitzeaktiviert verklebende Klebemassenschicht 61, eine elektrisch leitende Schicht 70 und eine untere hitzeaktiviert verklebende Klebemassenschicht 62 auf. Die obere hitzeaktiviert verklebende Klebemassenschicht 61 ist an der oberen Seitenfläche der elektrisch leitenden Schicht 70 angeordnet und die untere hitzeaktiviert verklebende Klebemassenschicht 62 ist an der unteren Seitenfläche der elektrisch leitenden Schicht 70 angeordnet. Die obere hitzeaktiviert verklebende Klebemassenschicht 61 und die untere hitzeaktiviert verklebende Klebemassenschicht 62 können gleich oder verschieden ausgebildet sein. Die Schichtdicke der oberen hitzeaktiviert verklebenden Klebemassenschicht 61 ist hierbei halb so groß wie die Schichtdicke der unteren hitzeaktiviert verklebende Klebemassenschicht 62. Infolge der unterschiedlich dicken Klebemassenschichten lassen sich auf beiden Seiten des Flächenelements unterschiedliche Klebkräfte realisieren. Das Verhältnis der Schichtdicke der elektrisch leitenden Schicht 70 zu der Gesamtdicke des hitzeaktiviert verklebbaren Flächenelements beträgt hier in etwa 0,4.

In Fig. 3 sind Längsschnitte durch weitere hitzeaktiviert verklebbare Flächenelemente gemäß der vorliegenden Erfindung schematisch dargestellt. Das im oberen Teil (A) der Abbildung dargestellte hitzeaktiviert verklebbare Flächenelement ist beidseitig verklebbar ausgerüstet und weist zusätzlich zu einer elektrisch leitenden Schicht 70 eine obere hitzeaktiviert verklebende Klebemassenschicht 61 und eine untere hitzeaktiviert verklebende Klebemassenschicht 62 auf. Die obere hitzeaktiviert verklebende Klebemassenschicht 61 ist an der oberen Seitenfläche der elektrisch leitenden Schicht 70 angeordnet und die untere hitzeaktiviert verklebende Klebemassenschicht 62 ist an der unteren Seitenfläche der elektrisch leitenden Schicht 70 angeordnet. Die obere hitzeaktiviert verklebende Klebemassenschicht 61 und die untere hitzeaktiviert verklebende Klebemassenschicht 62 können gleich oder verschieden ausgebildet sein. Beide Klebemassenschichten besitzen hierbei dieselbe Schichtdicke. Das Verhältnis der Schichtdicke der elektrisch leitenden Schicht 70 zu der Gesamtdicke des hitzeaktiviert verklebbaren Flächenelements beträgt hier in etwa 0,5, das heißt, dass die elektrisch leitende Schicht 70 etwa die Hälfte der Gesamtdicke des Flächenelements ausmacht.

Das im unteren Teil (B) der Abbildung dargestellte hitzeaktiviert verklebbare Flächenelement ist einseitig verklebbar ausgerüstet und weist zusätzlich zu einer elektrisch leitenden Schicht 70 eine hitzeaktiviert verklebende Klebemassenschicht 61 auf. Die hitzeaktiviert verklebende Klebemassenschicht 61 ist an der oberen Seitenfläche der elektrisch leitenden Schicht 70 angeordnet. Das Verhältnis der Schichtdicke der elektrisch leitenden Schicht 70 zu der Gesamtdicke des hitzeaktiviert verklebbaren Flächenelements beträgt hier zwei Drittel (in etwa 0,667), so dass die elektrisch leitende Schicht 70 also etwa zwei Drittel der Gesamtdicke des Flächenelements ausmacht.

Im Folgenden wird gezeigt, dass sich mit den erfindungsgemäß hergestellten dünnen Verklebungen Verklebungsfestigkeiten erreichen lassen, die denen konventioneller Verklebungen ähnlich sind. Hierzu wurden Probenuntersuchungen an hitzeaktiviert verklebbaren Flächenelementen durchgeführt, die zuvor in der in Fig. 4 schematisch dargestellten Vorrichtung mit den beiden Verklebungssubstraten verklebt worden waren. Es wurden jeweils zwei Polycarbonatplatten 10 ("Polycarbonatstäbe") mit einer Breite von 20 mm, einer Länge von 100 mm und einer Dicke von 3 mm als Verklebungssubstrate unter Verwendung unterschiedlicher hitzeaktiviert verklebbarer Flächenelemente 20 nach dem erfindungsgemäßen Verfahren miteinander verklebt, indem die Verklebungssubstrate in der Klebefuge um 10 mm überlappten und so eine rechteckige Verklebungsfläche mit einer Kantenlänge von 10 mm x 20 mm bildeten.

Als hitzeaktiviert verklebende Klebemassenschicht wurde ein hitzeaktiviert verklebbares Klebeband mit einer Klebemasse auf der Basis von Nitrilkautschuk und Phenolharz eingesetzt, das unter der Bezeichnung tesa HAF 84xx in unterschiedlichen Dicken verfügbar ist (die unterschiedlichen Dicken ergeben sich aus dem Produktnamen anhand der konkreten Angaben für den als Platzhalter angegebenen Teil "xx"). Um auch solche Klebemassenschichten untersuchen zu können, die dünner als diese kommerziell erhältlichen Klebebänder sind, wurden die dickeren Produkte zunächst in 2-Butanon gelöst. Die so erhaltene Lösung wurde auf einem geeigneten temporären Träger ausgestrichen und getrocknet. Auf diese Weise ließen sich Klebemassenschichten individuell in der jeweils benötigten Dicke herstellen.

Als Modellstruktur für die elektrisch leitende Schicht wurde eine Metallschicht definierter Zusammensetzung und Schichtdicke verwendet. Auf diese wurde jeweils auf jede Seite eine Klebemassenschicht bei einer Temperatur von 100 °C laminiert, so dass sich ein beidseitig hitzeaktiviert verklebbares Flächenelement mit Klebemassenschichten identischer Zusammensetzung an den beiden Seitenflächen der Metallschicht ergab. Bei dieser Laminierungstemperatur wird die chemische Vernetzungsreaktion innerhalb der Klebemasse noch nicht gestartet, sondern lediglich ein Anhaften der Klebemassenschichten an der Metallfolie ermöglicht. Untersucht wurden Proben, die als elektrisch leitende Schicht Aluminiumfolien mit einer Schichtdicken von 36 µm oder Kupferfolien mit Schichtdicken von 9 µm, 15µm und 20 µm aufwiesen. Ferner wurde eine Probe untersucht, die als elektrisch leitende Schicht ein Kupfer-Streckmetall einer Schichtdicke von 45 µm mit einer Maschengröße von 0,5 mm x 0,7 mm (Firma Bender GmbH, Siegen) aufwiesen.

Das Verklebungsverfahren wurde mit Hilfe einer modifizierten Induktionsanlage des Typs EWSF der Firma IFF GmbH, Ismaning, durchgeführt. Als Induktor zum lokalen Bereitstellen des Magnet-Wechselfeldes dient hier ein Induktionsfeldübertrager, der aus lediglich einem wassergekühlten stromdurchflossenen Leiter besteht, der als Sekundärspulenkreis eines Transformatorfeldübertragers eingesetzt wird und in einem Koaxialtransformator mit dem primärspulenseitig erzeugten Übertragerfeld in Wechselwirkung tritt. Der Induktionsfeldübertrager wurde in eine Matrix aus Polyetheretherketon (PEEK) eingebettet und die so erhaltene Anordnung als unteres Pressstempelelement 40 einer Pressvorrichtung eingesetzt, die zudem ein oberes Pressstempelelement 30 aufweist. Der Anpressdruck, mit dem der Vorverbund zwischen dem unteren Pressstempelelement 40 und dem oberen Pressstempelelement 30 senkrecht zu den Seitenflächen des hitzeaktiviert verklebbaren Flächenelements beaufschlagt wurde, betrug jeweils 2 MPa.

Mit Hilfe der modifizierten Induktionsanlage wurden für die Untersuchungen Magnet-Wechselfelder einer Frequenz aus einem Bereich von 10 kHz bis 30 kHz bei einer Pulsweite aus einem Bereich von 30 % bis 70 % erzeugt. Die Pulsweite gibt den prozentualen Anteil der Pulsdauer (Pulslänge) des Magnet-Wechselfelds an der Gesamtperiodendauer (der Summe aus Pulsdauer und der Dauer der Pausen zwischen zwei aufeinanderfolgenden Pulsen) des Magnet-Wechselfelds an. Die Zeit, in der das hitzeaktiviert verklebbare Flächenelement dem gepulsten Magnet-Wechselfeld ausgesetzt war (also die Dauer der induktiven Erwärmung), lag hier in einem Bereich von 3 s bis 9 s. Alle Versuche wurden zudem mit einer Nachpresszeit von 10 s durchgeführt, innerhalb derer eine induktive Nacherwärmung in einem Magnet-Wechselfeld derselben Frequenz wie beim thermischen Aktivieren der Klebemassen bei einer Pulsweite von 20 % erfolgte (entsprechend einem Verhältnis von Pulsdauer zu Pausendauer von 1 : 4).

Die nachfolgend dargestellten Versuchsergebnisse wurden für Magnet-Wechselfelder mit einer Frequenz von 20 kHz erhalten.

Als Kenngröße für die Qualität der erzielten Verklebung wurde die Verklebungsfestigkeit des so erhaltenen Verbunds für unterschiedliche hitzeaktiviert verklebbare Flächenelemente und unterschiedliche Verfahrensparameter ermittelt. Hierzu wurde die Verklebungsfestigkeit in einem dynamischen Zugscherversuch entsprechend DIN 53283 bei 23 °C für eine Prüfgeschwindigkeit von 1 mm/min jeweils quantitativ bestimmt (in N/cm²). Eine repräsentative Auswahl der Ergebnisse der umfassenden Versuchsreihen dieser Untersuchungen ist in den Fig. 5-13 wiedergegeben.

Jedes der in den Fig. 5-13 dargestellten Diagramme zeigt ein Konturdiagramm, in dem die jeweils bestimmte Verklebungsfestigkeit in Abhängigkeit von der prozentualen Pulsweite (Abszisse) sowie der Dauer der induktiven Erwärmung (Ordinate) als Konturlinien dargestellt ist; der jeweilige dynamische Klebkraftwert ist dabei an der zugehörigen Konturlinie (Isodyne) angegeben. Die untersuchten Flächenelemente unterschieden sich hierbei im Hinblick auf die Schichtdicke der jeweils auflaminierten Klebemassenschichten und auf die Schichtdicke der elektrisch leitenden Schichten. Erkennbar ist in allen Konturdiagrammen, dass die Verklebungsfestigkeit generell mit der Dauer der induktiven Erwärmung und mit steigender Pulsweite zunimmt.

In Fig. 5 ist die Verklebungsfestigkeit (in N/cm²) in Abhängigkeit von der prozentualen Pulsweite (in % der Gesamtperiodendauer) und der Dauer der induktiven Erwärmung (in s) für ein erfindungsgemäßes hitzeaktiviert verklebbares Flächenelement dargestellt, das in einem Verfahren gemäß der vorliegenden Erfindung mit zwei Polycarbonatplatten zu einem Endverbund (Probe 1) verklebt worden war. Das Flächenelement wies als elektrisch leitende Schicht eine Aluminiumfolie mit einer Schichtdicke von 36 µm auf. Auf beide Seitenflächen der Aluminiumfolie war eine Klebemassenschicht mit einer Schichtdicke von jeweils 10 µm auflaminiert. Somit betrug die Gesamtdicke des Flächenelements 56 µm, was einem Verhältnis der Schichtdicke der elektrisch leitenden Schicht zu der Gesamtdicke des Flächenelements von 0,64 entspricht.

In Fig. 6 ist die Verklebungsfestigkeit (in N/cm²) in Abhängigkeit von der prozentualen Pulsweite (in % der Gesamtperiodendauer) und der Dauer der induktiven Erwärmung (in s) für ein erfindungsgemäßes hitzeaktiviert verklebbares Flächenelement dargestellt, das in einem Verfahren gemäß der vorliegenden Erfindung mit zwei Polycarbonatplatten zu einem Endverbund (Probe 2) verklebt worden war. Das Flächenelement wies als elektrisch leitende Schicht eine Aluminiumfolie mit einer Schichtdicke von 36 µm auf. Auf beide Seitenflächen der Aluminiumfolie war eine Klebemassenschicht mit einer Schichtdicke von jeweils 15 µm auflaminiert. Somit betrug die Gesamtdicke des Flächenelements 66 µm, was einem Verhältnis der Schichtdicke der elektrisch leitenden Schicht zu der Gesamtdicke des Flächenelements von 0,55 entspricht.

In Fig. 7 ist die Verklebungsfestigkeit (in N/cm²) in Abhängigkeit von der prozentualen Pulsweite (in % der Gesamtperiodendauer) und der Dauer der induktiven Erwärmung (in s) für ein hitzeaktiviert verklebbares Flächenelement dargestellt, das nicht gemäß der vorliegenden Erfindung ausgebildet war und mit zwei Polycarbonatplatten zu einem Endverbund (Vergleichsprobe 1) verklebt worden war. Das Flächenelement wies als elektrisch leitende Schicht eine Aluminiumfolie mit einer Schichtdicke von 36 µm auf. Auf beide Seitenflächen der Aluminiumfolie war eine Klebemassenschicht mit einer Schichtdicke von jeweils 30 µm auflaminiert. Somit betrug die Gesamtdicke des Flächenelements 96 µm, was einem Verhältnis der Schichtdicke der elektrisch leitenden Schicht zu der Gesamtdicke des Flächenelements von 0,38 entspricht. Da das Flächenelement eine Gesamtdicke von mehr als 70 µm aufwies, war dieses nicht erfindungsgemäß ausgebildet.

In Fig. 8 ist die Verklebungsfestigkeit (in N/cm²) in Abhängigkeit von der prozentualen Pulsweite (in % der Gesamtperiodendauer) und der Dauer der induktiven Erwärmung (in s) für ein hitzeaktiviert verklebbares Flächenelement dargestellt, das nicht gemäß der vorliegenden Erfindung ausgebildet war und mit zwei Polycarbonatplatten zu einem Endverbund (Vergleichsprobe 2) verklebt worden war. Das Flächenelement wies als elektrisch leitende Schicht eine Aluminiumfolie mit einer Schichtdicke von 36 µm. Auf beide Seitenflächen der Aluminiumfolie war eine Klebemassenschicht mit einer Schichtdicke von jeweils 60 µm auflaminiert. Somit betrug die Gesamtdicke des Flächenelements 156 µm, was einem Verhältnis der Schichtdicke der elektrisch leitenden Schicht zu der Gesamtdicke des Flächenelements von 0,23 entspricht. Da bei diesem Flächenelement das Dickenverhältnis kleiner als 0,3 war und zudem dessen eine Gesamtdicke mehr 70 µm betrug, war das Flächenelement nicht erfindungsgemäß ausgebildet.

Beim Vergleich der in Fig. 5 und 6 dargestellten Verklebungsfestigkeiten, die für Verklebungen mit erfindungsgemäßen Flächenelementen erhalten wurden, mit den in Fig. 7 und 8 dargestellten Verklebungsfestigkeiten, die für Flächenelemente erhalten wurden, die jeweils zwei dicke Klebeschichten aufwiesen und somit nicht gemäß der vorliegenden Erfindung ausgebildet waren, wurde überraschenderweise gefunden, dass die mit den erfindungsgemäßen Flächenelementen erhaltenen Verklebungen in etwa so hohe Verklebungsfestigkeiten aufwiesen wie Verklebungen, die mit erheblich dickeren Klebemassenschichten erhalten wurden. Somit ist ersichtlich, dass sich bei Anwendung der vorliegenden Erfindung hochfeste Verklebungen auch mit Klebemassenschichten von geringer Schichtdicke erhalten lassen.

In Fig. 9 ist die Verklebungsfestigkeit (in N/cm²) in Abhängigkeit von der prozentualen Pulsweite (in % der Gesamtperiodendauer) und der Dauer der induktiven Erwärmung (in s) für ein erfindungsgemäßes hitzeaktiviert verklebbares Flächenelement dargestellt, das in einem Verfahren gemäß der vorliegenden Erfindung mit zwei Polycarbonatplatten zu einem Endverbund (Probe 3) verklebt worden war. Das Flächenelement wies als elektrisch leitende Schicht eine sehr dünne Kupferfolie mit einer Schichtdicke von 9 µm auf. Auf beide Seitenflächen der Kupferfolie war eine Klebemassenschicht mit einer Schichtdicke von jeweils 9 µm auflaminiert. Somit betrug die Gesamtdicke des Flächenelements 27 µm, was einem Verhältnis der Schichtdicke der elektrisch leitenden Schicht zu der Gesamtdicke des Flächenelements von einem Drittel entspricht.

In Fig. 10 ist die Verklebungsfestigkeit (in N/cm²) in Abhängigkeit von der prozentualen Pulsweite (in % der Gesamtperiodendauer) und der Dauer der induktiven Erwärmung (in s) für ein erfindungsgemäßes hitzeaktiviert verklebbares Flächenelement dargestellt, das in einem Verfahren gemäß der vorliegenden Erfindung mit zwei Polycarbonatplatten zu einem Endverbund (Probe 4) verklebt worden war. Das Flächenelement wies als elektrisch leitende Schicht eine sehr dünne Kupferfolie mit einer Schichtdicke von 15 µm auf. Auf beide Seitenflächen der Kupferfolie war eine Klebemassenschicht mit einer Schichtdicke von ebenfalls jeweils 10 µm auflaminiert. Somit betrug die Gesamtdicke des Flächenelements 35 µm, was einem Verhältnis der Schichtdicke der elektrisch leitenden Schicht zu der Gesamtdicke des Flächenelements von 0,43 entspricht.

In Fig. 11 ist die Verklebungsfestigkeit (in N/cm²) in Abhängigkeit von der prozentualen Pulsweite (in % der Gesamtperiodendauer) und der Dauer der induktiven Erwärmung (in s) für ein erfindungsgemäßes hitzeaktiviert verklebbares Flächenelement dargestellt, das in einem Verfahren gemäß der vorliegenden Erfindung mit zwei Polycarbonatplatten zu einem Endverbund (Probe 5) verklebt worden war. Das Flächenelement wies als elektrisch leitende Schicht eine dünne Kupferfolie mit einer Schichtdicke von 20 µm auf. Auf beide Seitenflächen der Kupferfolie war eine Klebemassenschicht mit einer Schichtdicke von ebenfalls jeweils 10 µm auflaminiert. Somit betrug die Gesamtdicke des Flächenelements 40 µm, was einem Verhältnis der Schichtdicke der elektrisch leitenden Schicht zu der Gesamtdicke des Flächenelements von 0,5 entspricht.

In Fig. 12 ist die Verklebungsfestigkeit (in N/cm²) in Abhängigkeit von der prozentualen Pulsweite (in % der Gesamtperiodendauer) und der Dauer der induktiven Erwärmung (in s) für ein hitzeaktiviert verklebbares Flächenelement dargestellt, das nicht gemäß der vorliegenden Erfindung ausgebildet war und mit zwei Polycarbonatplatten zu einem Endverbund (Vergleichsprobe 3) verklebt worden war. Das Flächenelement wies als elektrisch leitende Schicht eine Kupferfolie mit einer Schichtdicke von 20 µm. Auf beide Seitenflächen der Kupferfolie war eine Klebemassenschicht mit einer Schichtdicke von jeweils 30 µm auflaminiert. Somit betrug die Gesamtdicke des Flächenelements 80 µm, was einem Verhältnis der Schichtdicke der elektrisch leitenden Schicht zu der Gesamtdicke des Flächenelements von 0,25 entspricht. Da bei dem Flächenelement das Dickenverhältnis kleiner war als 0,3 und zudem die Gesamtdicke mehr als 70 µm betrug, war das Flächenelement nicht erfindungsgemäß ausgebildet.

Beim Vergleich der in Fig. 9, 10 und 11 dargestellten Verklebungsfestigkeiten untereinander, die für Verklebungen mit erfindungsgemäßen Flächenelementen mit unterschiedlich dicken Kupferfolien erhalten wurden, ist ersichtlich, dass die Verklebungsfestigkeit mit der Schichtdicke der elektrisch leitenden Schicht zunimmt, auch wenn die Schichtdicke der Klebeschichten konstant bleibt. Dies ist erstaunlich, da zwar die Abhängigkeit der Verklebungsfestigkeit von der Schichtdicke der Klebemassenschicht bekannt ist, ein entsprechender Effekt für die Schichtdicke der elektrisch leitenden Schicht jedoch nicht erwartet wird. Demzufolge steigt die Verklebungsfestigkeit überraschenderweise also mit dem Anteil der Schichtdicke der elektrisch leitenden Schicht an der Gesamtdicke des Flächenelements.

Beim Vergleich dieser in Fig. 9, 10 und 11 dargestellten Verklebungsfestigkeiten mit der in Fig. 12 dargestellten Verklebungsfestigkeit, die für ein Flächenelement erhalten wurde, das zwei dicke Klebeschichten aufwies und nicht gemäß der vorliegenden Erfindung ausgebildet war, wurde überraschenderweise gefunden, dass die mit den erfindungsgemäßen Flächenelementen erhaltenen Verklebungen eine in etwa so hohe Verklebungsfestigkeit aufwiesen wie eine Verklebung, die mit erheblich dickeren Klebemassenschichten erhalten wurden. Insbesondere der Vergleich der für Probe 5 und für Vergleichsprobe 3 ermittelten Verklebungsfestigkeiten zeigt, dass sich durch Einsatz der erfindungsgemäßen Lehre bereits für Flächenelemente mit dünnen Klebemassenschichten von 10 µm Schichtdicke Verklebungsfestigkeiten erzielen ließen, die mit denen von Flächenelementen identisch waren, deren Klebemassenschichten dreimal so dick waren. Demzufolge ist ersichtlich, dass sich bei Anwendung der vorliegenden Erfindung hochfeste Verklebungen auch mit Klebemassenschichten von sehr geringer Schichtdicke erhalten lassen.

Beim Vergleich der in Fig. 9, 10 und 11 dargestellten Verklebungsfestigkeiten, die für erfindungsgemäße Flächenelemente mit Kupferfolien erhalten wurden, mit den in Fig. 5, 6 und 7 dargestellten Verklebungsfestigkeiten, die für erfindungsgemäße Flächenelementen mit Aluminiumfolien erhalten wurden, ist zudem erkennbar, dass bei Verwendung einer elektrisch leitenden Schicht von sehr hoher elektrischer Leitfähigkeit wie etwa einer Kupferfolie bereits bei geringen Schichtdicken der elektrisch leitenden Schicht eine sehr hohe Verklebungsfestigkeit erzielt werden kann, was bei Verwendung einer elektrisch leitenden Schicht von geringerer elektrischer Leitfähigkeit wie etwa einer Aluminiumfolie erst bei deutlich größeren Schichtdicken möglich ist.

In Fig. 13 ist die Verklebungsfestigkeit (in N/cm²) in Abhängigkeit von der prozentualen Pulsweite (in % der Gesamtperiodendauer) und der Dauer der induktiven Erwärmung (in s) für ein erfindungsgemäßes hitzeaktiviert verklebbares Flächenelement dargestellt, das in einem Verfahren gemäß der vorliegenden Erfindung mit zwei Polycarbonatplatten zu einem Endverbund (Probe 6) verklebt worden war. Das Flächenelement wies als elektrisch leitende Schicht ein Kupferstreckmetall mit einer Schichtdicke von 45 µm und einer Maschengröße von 0,5 mm x 0,7 mm auf. Auf beide Seitenflächen der Kupferfolie war eine Klebemassenschicht mit einer Schichtdicke von jeweils 20 µm auflaminiert. Somit betrug die Gesamtdicke des Flächenelements 65 µm, was einem Verhältnis der Schichtdicke der elektrisch leitenden Schicht zu der Gesamtdicke des Flächenelements von 0,7 entspricht.

Wie aus Fig. 13 erkennbar ist, lassen sich auch bei Verwendung einer durchbrochenen und damit diskontinuierlichen elektrisch leitende Schicht in dem hitzeaktiviert verklebbaren Flächenelement Verklebungen erzielen, die aufgrund des hohen inneren Zusammenhalts des Flächenelements Verklebungsfestigkeiten aufweisen, die denen von aus dem Stand der Technik bekannten Verklebungen in etwa entsprechen.

Die vorstehend beschriebenen exemplarischen Versuche belegen somit die hervorragende Eignung des erfindungsgemäßen Verfahrens und der erfindungsgemäßen Vorrichtung, um hochbelastbare dünne Verklebungen auch in elektronischen Geräten auf schonende Weise zu erzeugen.

## Patentansprüche

1. Verfahren zum Verkleben von Baueinheiten elektronischer Geräte mittels eines hitzeaktiviert verklebbaren Flächenelements, das eine Gesamtdicke von weniger als 70 µm aufweist, mit einem Verklebungssubstrat, das einen Wärmeleitungskoeffizienten von höchstens 5 W/mK aufweist, das Verfahren umfassend die folgenden Schritte:
ein hitzeaktiviert verklebbares Flächenelement mit einer elektrisch leitenden Schicht und zumindest einer hitzeaktiviert verklebenden Klebemassenschicht wird bereit gestellt;
das Verklebungssubstrat wird mit der zumindest einen hitzeaktiviert verklebenden Klebemassenschicht des hitzeaktiviert verklebbaren Flächenelements in Kontakt , gebracht und so ein Vorverbund gebildet;
der Vorverbund wird in einem Magnet-Wechselfeld einer Frequenz von mindestens 100 Hz und höchstens 200 kHz für eine Dauer von höchstens 20 s induktiv erwärmt und so ein Endverbund gebildet;
**dadurch gekennzeichnet, dass**
als das hitzeaktiviert verklebbare Flächenelement ein Flächenelement verwendet wird, dessen elektrisch leitende Schicht eine Schichtdicke von weniger als 50 µm aufweist, wobei das Verhältnis der Schichtdicke der elektrisch leitenden Schicht zu der Gesamtdicke des hitzeaktiviert verklebbaren Flächenelements größer ist als 0,33, insbesondere größer als 0,5 oder sogar größer als 0,6.

2. Verfahren nach Anspruch 1, **dadurch gekennzeichnet, dass** als das hitzeaktiviert verklebbare Flächenelement ein Flächenelement verwendet wird, das eine Gesamtdicke von weniger als 50 µm aufweist, insbesondere von weniger als 30 µm.

3. Verfahren nach einem Anspruch 1 oder Anspruch 2, **dadurch gekennzeichnet, dass** als das hitzeaktiviert verklebbare Flächenelement ein Flächenelement verwendet wird, bei dem als die elektrisch leitende Schicht eine Schicht mit einer Schichtdicke von weniger als 20 µm verwendet wird, insbesondere von weniger als 10 µm.

4. Verfahren nach einem der Ansprüche 1 bis 3, **dadurch gekennzeichnet, dass** als das hitzeaktiviert verklebbare Flächenelement ein Flächenelement verwendet wird, das eine weitere hitzeaktiviert verklebende Klebemassenschicht aufweist, und dass der Vorverbund vor dem induktiven Erwärmen mit einem weiteren Verklebungssubstrat in Kontakt gebracht wird, indem die weitere hitzeaktiviert verklebende Klebemassenschicht des hitzeaktiviert verklebbaren Flächenelements des Vorverbunds mit dem weiteren Verklebungssubstrat in Kontakt gebracht wird.

5. Verfahren nach einem der Ansprüche 1 bis 3, **dadurch gekennzeichnet, dass** als das hitzeaktiviert verklebbare Flächenelement ein Flächenelement verwendet wird, das eine weitere Klebemassenschicht aufweist, wobei die weitere Klebemassenschicht vor dem Ausbilden des Vorverbunds mit einem weiteren Verklebungssubstrat verbunden wird.

6. Verfahren nach einem der Ansprüche 1 bis 5, **dadurch gekennzeichnet, dass** als das hitzeaktiviert verklebbare Flächenelement ein zugeschnittenes Flächenelement verwendet wird, dessen Form auf die Form der Verklebungsfläche zugeschnitten ist.

7. Verfahren nach einem der Ansprüche 1 bis 6, **dadurch gekennzeichnet, dass** als das hitzeaktiviert verklebbare Flächenelement ein Flächenelement mit einer minimalen Stegbreite von weniger als 5 mm verwendet wird, insbesondere von weniger als 3 mm oder sogar von weniger als 2 mm.

8. Verfahren nach einem der Ansprüche 1 bis 7, **dadurch gekennzeichnet, dass** als das Verklebungssubstrat ein Verklebungssubstrat verwendet wird, das eine im dreidimensionalen Raum gewölbte Verklebungsfläche aufweist.

9. Verfahren nach einem der Ansprüche 1 bis 8, **dadurch gekennzeichnet, dass** die Aufheizrate beim induktiven Erwärmen mindestens 2,5 °C/s und höchstens 200 °C/s beträgt, insbesondere mindestens 10 °C/s und höchstens 100 °C/s.

10. Verfahren nach einem der Ansprüche 1 bis 9, **dadurch gekennzeichnet, dass** der Vorverbund gleichzeitig mit dem induktiven Erwärmen senkrecht zu einem Seitenflächenabschnitt des hitzeaktiviert verklebbaren Flächenelements mit einem Druck von mindestens 1 MPa beaufschlagt wird, insbesondere von mindestens 3 MPa.

11. Verfahren nach Anspruch 10, **dadurch gekennzeichnet, dass** der Druck auch nach Beendigung des induktiven Erwärmens für eine Nachpressdauer aufrecht erhalten wird, wobei der Endverbund während zumindest eines Teils der Nachpressdauer erneut induktiv erwärmt wird.

12. Verfahren nach Anspruch 10 oder 11, **dadurch gekennzeichnet dass** das induktive Erwärmen und das Beaufschlagen mit Druck mittels einer Vorrichtung mit zumindest einem Pressstempelelement durchgeführt wird, das ein Induktionsheizungsmittel aufweist.

## Claims

1. Method for adhesively bonding subassemblies of electronic devices by means of a heat-activatedly bondable sheetlike element, which has a total thickness of less than 70 µm, to a bond substrate which has a thermal conductivity coefficient of at most 5 W/mK, the method comprising the following steps:
a heat-activatedly bondable sheetlike element having an electrically conducting layer and at least one heat-activatedly bonding adhesive layer is provided,
the bond substrate is contacted with the at least one heat-activatedly bonding adhesive layer of the heat-activatedly bondable sheetlike element, to form a preliminary assembly,
the preliminary assembly is subjected to inductive heating in an alternating magnetic field with a frequency of at least 100 Hz and at most 200 kHz for a duration of at most 20 s, to form a final assembly,
**characterized in that**
the heat-activatedly bondable sheetlike element used is a sheetlike element whose electrically conducting layer has a layer thickness of less than 50 µm, the ratio of the layer thickness of the electrically conducting layer to the overall thickness of the heat-activatedly bondable sheetlike element being greater than 0.33, more particularly greater than 0.5 or even greater than 0.6.

2. Method according to Claim 1, **characterized in that** the heat-activatedly bondable sheetlike element used is a sheetlike element which has an overall thickness of less than 50 µm, more particularly of less than 30 µm.

3. Method according to Claim 1 or Claim 2, **characterized in that** use is made as the heat-activatedly bondable sheetlike element of a sheetlike element in which use is made as the electrically conducting layer of a layer having a layer thickness of less than 20 µm, more particularly of less than 10 µm.

4. Method according to any of Claims 1 to 3, **characterized in that** use is made as the heat-activatedly bondable sheetlike element of a sheetlike element which has a further heat-activatedly bonding adhesive layer, and **in that** the preliminary assembly, prior to the inductive heating, is contacted with a further bond substrate, the further heat-activatedly bonding adhesive layer of the heat-activatedly bondable sheetlike element of the preliminary assembly being contacted with the further bond substrate.

5. Method according to any of Claims 1 to 3, **characterized in that** use is made as the heat-activatedly bondable sheetlike element of a sheetlike element which has a further layer of adhesive, the further layer of adhesive being joined to a further bond substrate before the preliminary assembly is formed.

6. Method according to any of Claims 1 to 5, **characterized in that** use is made as the heat-activatedly bondable sheetlike element of a cut-to-size sheetlike element whose shape has been cut to the shape of the bond area.

7. Method according to any of Claims 1 to 6, **characterized in that** use is made as the heat-activatedly bondable sheetlike element of a sheetlike element having a minimum strut width of less than 5 mm, more particularly of less than 3 mm or even of less than 2 mm.

8. Method according to any of Claims 1 to 7, **characterized in that** use is made as the bond substrate of a bond substrate which has a bond area curved in three-dimensional space.

9. Method according to any of Claims 1 to 8, **characterized in that** the heating rate for the inductive heating is at least 2.5°C/s and at most 200°C/s, more particularly at least 10°C/s and at most 100°C/s.

10. Method according to any of Claims 1 to 9, **characterized in that**, simultaneously with the inductive heating, the preliminary assembly is subjected, perpendicularly to a side-face section of the heat-activatedly bondable sheetlike element, to a pressure of at least 1 MPa, more particularly of at least 3 MPa.

11. Method according to Claim 10, **characterized in that** even after the end of the inductive heating, the pressure is maintained for a subsequent pressing duration, the final assembly being subjected to further inductive heating during at least part of the subsequent pressing duration.

12. Method according to Claim 10 or 11, **characterized in that** the inductive heating and the subjection to pressure are carried out by means of a device having at least one press-ram element which has an induction heating means.

## Revendications

1. Procédé pour coller des modules d'appareils électroniques au moyen d'un élément plat pouvant être collé par activation thermique, qui présente une épaisseur totale inférieure à 70 µm, sur un substrat de collage qui présente un coefficient de conductivité thermique d'au plus 5 W/mk, le procédé comprenant les étapes suivantes :
un élément plat pouvant être collé par activation thermique, présentant une couche électriquement conductrice et au moins une couche de masse adhésive collant par activation thermique est mis à disposition ;
le substrat de collage est mis en contact avec ladite au moins une couche de masse adhésive collant par activation thermique de l'élément plat pouvant être collé par activation thermique et forme ainsi un précomposite ;
le précomposite est chauffé par induction dans un champ magnétique alternatif d'une fréquence d'au moins 100 Hz et d'au plus 200 kHz pendant une durée d'au plus 20 s et forme ainsi une composite fini ;
**caractérisé en ce qu'**on utilise, comme élément plat pouvant être collé par activation thermique, un élément plat dont la couche électriquement conductrice présente une épaisseur de couche inférieure à 50 µm, le rapport de l'épaisseur de la couche électriquement conductrice à l'épaisseur totale de l'élément plat pouvant être collé par activation thermique étant supérieur à 0,33, en particulier supérieur à 0,5 ou même supérieur à 0,6.

2. Procédé selon la revendication 1, **caractérisé en ce qu'**on utilise, comme élément plat pouvant être collé par activation thermique, un élément plat qui présente une épaisseur totale inférieure à 50 µm, en particulier inférieure à 30 µm,

3. Procédé selon l'une quelconque des revendications 1 à 2, **caractérisé en ce qu'**on utilise, comme élément plat pouvant être collé par activation thermique, un élément plat dans lequel on utilise, comme couche électriquement conductrice, une couche présentant une épaisseur de couche inférieure à 20 µm, en particulier inférieure à 10 µm,

4. Procédé selon l'une quelconque des revendications 1 à 3, **caractérisé en ce qu'**on utilise, comme élément plat pouvant être collé par activation thermique, un élément plat qui présente une autre couche de masse adhésive collant par activation thermique et **en ce que** le précomposite est mis en contact, avant le chauffage par induction, avec un autre substrat de collage, **en ce que** l'autre couche de masse adhésive collant par activation thermique de l'élément plat pouvant être collé par activation thermique de précomposite est mis en contact avec l'autre substrat de collage.

5. Procédé selon l'une quelconque des revendications 1 à 3, **caractérisé en ce qu'**on utilise, comme élément plat pouvant être collé par activation thermique, un élément plat qui présente une autre couche de masse adhésive, l'autre couche de masse adhésive étant assemblée avec un autre substrat de collage avant la formation du précomposite.

6. Procédé selon l'une quelconque des revendications 1 à 5, **caractérisé en ce qu'**on utilise, comme élément plat pouvant être collé par activation thermique, un élément plat découpé, dont la forme est adaptée à la forme de la surface de collage.

7. Procédé selon l'une quelconque des revendications 1 à 6, **caractérisé en ce qu'**on utilise, comme élément plat pouvant être collé par activation thermique, un élément plat présentant une largeur d'âme minimale inférieure à 5 mm, en particulier inférieure à 3 mm et même inférieure à 2 mm.

8. Procédé selon l'une quelconque des revendications 1 à 7, **caractérisé en ce qu'**on utilise, comme substrat de collage, un substrat de collage qui présente une surface de collage incurvée dans un espace tridimensionnel.

9. Procédé selon l'une quelconque des revendications 1 à 8, **caractérisé en ce que** la vitesse de chauffage lors du chauffage par induction est d'au moins 2,5°C/s et d'au plus 200°C/s, en particulier d'au moins 10°C/s et d'au plus 100°C/s.

10. Procédé selon l'une quelconque des revendications 1 à 9, **caractérisé en ce que** le précomposite est sollicité, simultanément avec le chauffage par induction perpendiculairement à une section de face latérale de l'élément plat pouvant être collé par activation thermique, par une pression d'au moins 1 MPa, en particulier d'au moins 3 MPa.

11. Procédé selon la revendication 10, **caractérisé en ce que** la pression est également maintenue après la fin du chauffage par induction pendant une durée de post-pression, le composite final étant à nouveau chauffé par induction pendant au moins une partie de la durée de post-pression.

12. Procédé selon la revendication 10 ou 11, **caractérisé en ce que** le chauffage par induction et la sollicitation par la pression sont réalisés au moyen d'un dispositif présentant au moins un élément à piston de presse, qui présente un moyen de chauffage par induction.
